# EUROPEAN PATENT APPLICATION

(11) **EP 4 528 690 A1**
(43) Date of publication of application: **26.03.2025**
(21) Application number: 23807522.0
(22) Date of filing: 10.05.2023
(51) Int. Cl.: G08G 1/09, G05D 1/02, G06Q 50/10

(54) **INFORMATION PROCESSING METHOD, PROGRAM, AND INFORMATION PROCESSING SYSTEM**

(30) Priority: 18.05.2022 JP 2022081530
(71) Applicant: Panasonic Intellectual Property Management Co., Ltd., Kadoma-shi, Osaka 571-0057 (JP)
(72) Inventor: ANABUKI, Motoshi, Kadoma-shi, Osaka 571-0057 (JP); OYA, Akihisa, Kadoma-shi, Osaka 571-0057 (JP); TONOIKE, Takumi, Kadoma-shi, Osaka 571-0057 (JP); ARAI, Toshiya, Kadoma-shi, Osaka 571-0057 (JP); KUHARA, Shunsuke, Kadoma-shi, Osaka 571-0057 (JP)
(74) Representative: Novagraaf International SA
(86) International application number: PCT/JP2023/017606
(87) International publication number: WO 2023/223918

(57) **Abstract**

An information processing method is an information processing method executed by a computer, and includes: obtaining first information related to a service executed by each of at least one mobile body, among a plurality of mobile bodies that move autonomously (S104), when an event to which a responder is to respond by traveling to a position of the at least one mobile body is occurring in the at least one mobile body (S103: Yes); calculating, based on the first information obtained, a response necessity level indicating a degree of a necessity to respond to the event, for each of the at least one mobile body (S105); and outputting second information related to the response necessity level calculated (S106).

## Description

### [Technical Field]

The present disclosure relates to an information processing method, a program, and an information processing system for outputting information related to a mobile body that moves autonomously.

### [Background Art]

When a mobile body that moves autonomously becomes unable to move autonomously for some reason, it is necessary to dispatch a responder to the site to quickly restore or recover the mobile body, or to ensure the mobile body does not interfere with traffic.

PTL 1 discloses a management system that manages the vehicle statuses of automated driving vehicles that travel automatically by having an automated driving support center periodically communicate with the automated driving vehicles. According to this management system, if communication between the automated driving support center and an automated driving vehicle is interrupted, whether to contact a support worker who supports the automated driving vehicle is determined based on the communication conditions.

### [Citation List]

### [Patent Literature]

PTL 1: International Publication No. 2021/085101

### [Summary of Invention]

### [Technical Problem]

However, PTL 1 does not take into account a situation where communication between the automated driving support center and a plurality of automated driving vehicles has been interrupted, i.e., a situation where each of a plurality of mobile bodies is having difficulty moving autonomously. The technique disclosed in PTL 1 therefore as a problem in that in a situation where each of a plurality of mobile bodies is having difficulty moving autonomously, the support worker (responder) cannot improve the situation efficiently.

Accordingly, the present disclosure provides an information processing method and the like that, when a situation where each of a plurality of mobile bodies is having difficulty moving autonomously has occurred, makes it easy for a responder to improve the situation efficiently.

### [Solution to Problem]

An information processing method according to one aspect of the present disclosure is an information processing method executed by a computer, the information processing method including: obtaining first information related to a service executed by each of at least one mobile body, among a plurality of mobile bodies that move autonomously, when an event to which a responder is to respond by traveling to a position of the at least one mobile body is occurring in the at least one mobile body; calculating, based on the first information obtained, a response necessity level indicating a degree of a necessity to respond to the event, for each of the at least one mobile body; and outputting second information related to the response necessity level calculated.

Note that these comprehensive or specific aspects may be realized by a system, a method, an integrated circuit, a computer program, or a computer-readable recording medium such as a CD-ROM, or may be implemented by any desired combination of systems, devices, methods, integrated circuits, computer programs, and recording media.

### [Advantageous Effects of Invention]

According to the information processing method and the like of one embodiment of the present disclosure, when a situation where each of a plurality of mobile bodies is having difficulty moving autonomously has occurred, it is easy for a responder to improve the situation efficiently.

### [Brief Description of Drawings]

[FIG. 1]

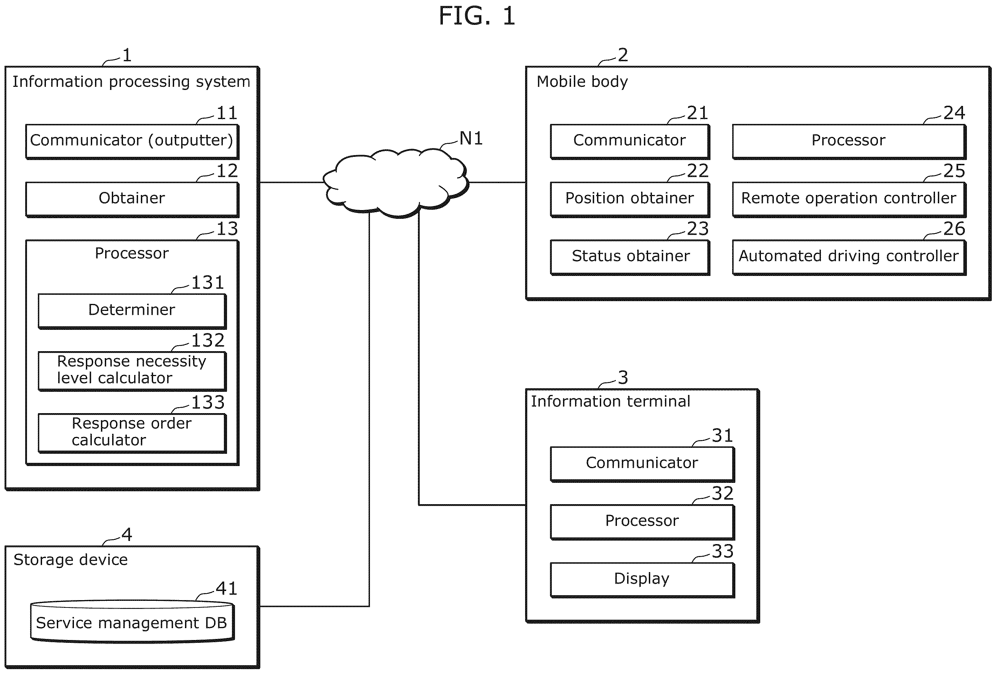

   FIG. 1 is a block diagram illustrating an example of an information processing system according to Embodiment 1.
[FIG. 2]

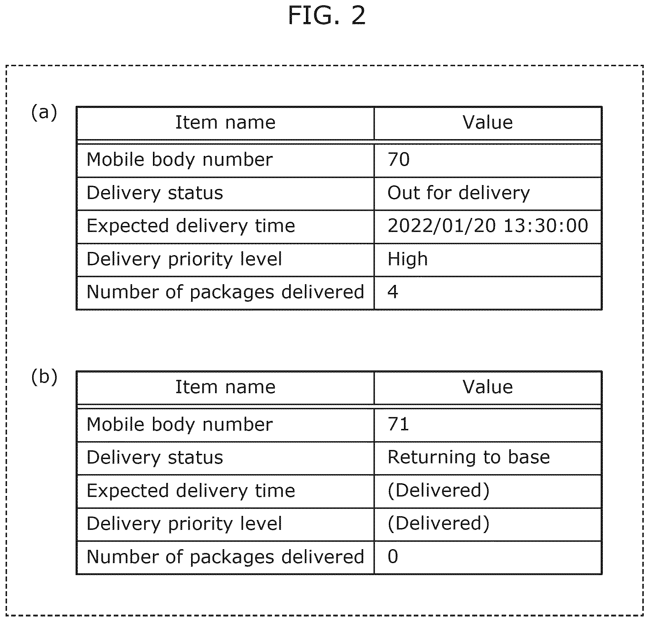

   FIG. 2 is a diagram illustrating an example of service information.
[FIG. 3]

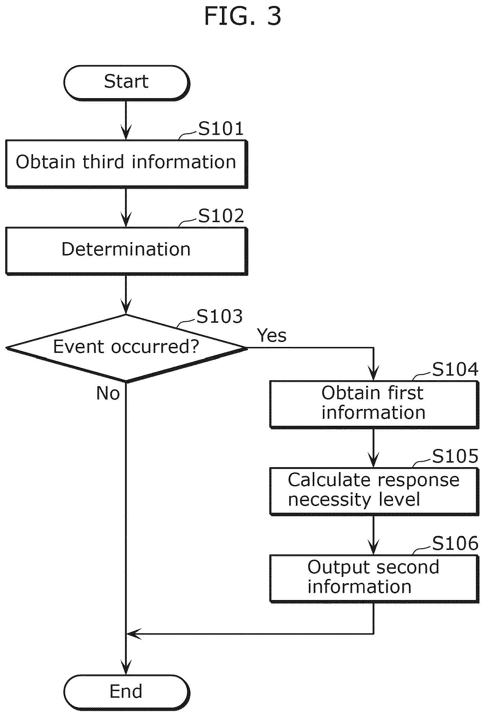

   FIG. 3 is a flowchart illustrating an example of basic operations by the information processing system according to Embodiment 1.
[FIG. 4]

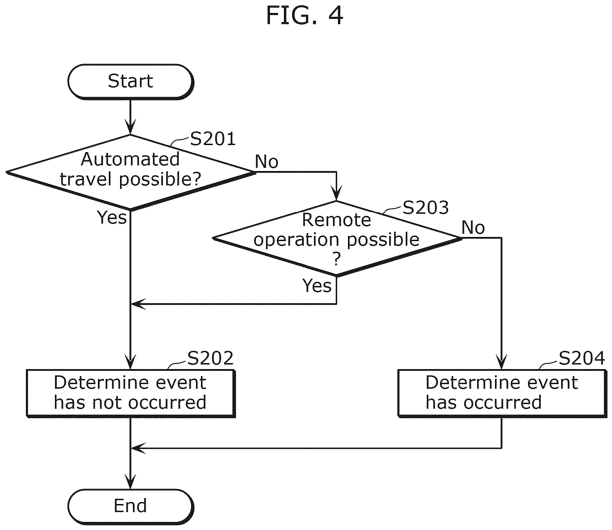

   FIG. 4 is a flowchart illustrating an example of operations for determining whether a response by a responder is necessary in the information processing system according to Embodiment 1.
[FIG. 5]

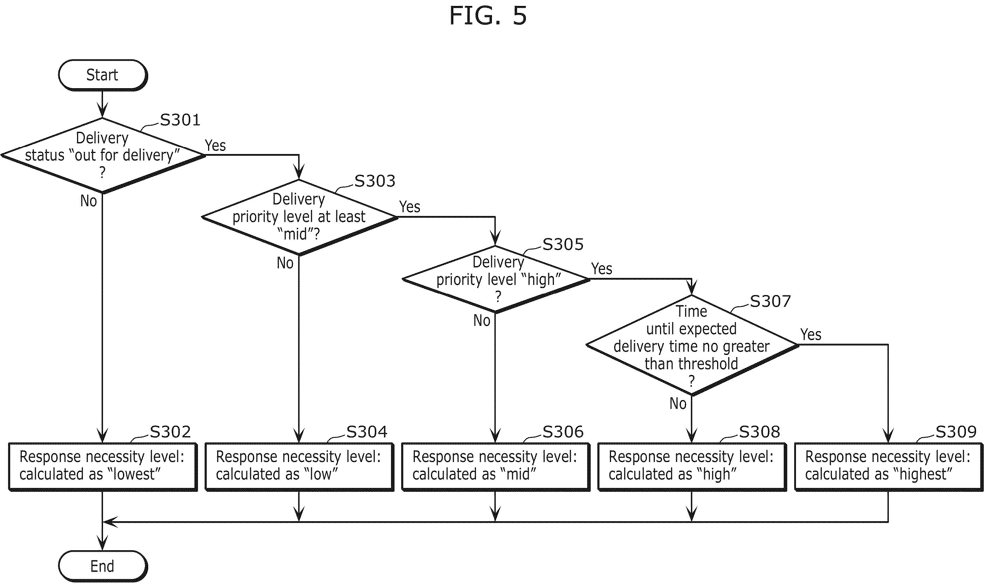

   FIG. 5 is a flowchart illustrating an example of operations for calculating a response necessity level in the information processing system according to Embodiment 1.
[FIG. 6]

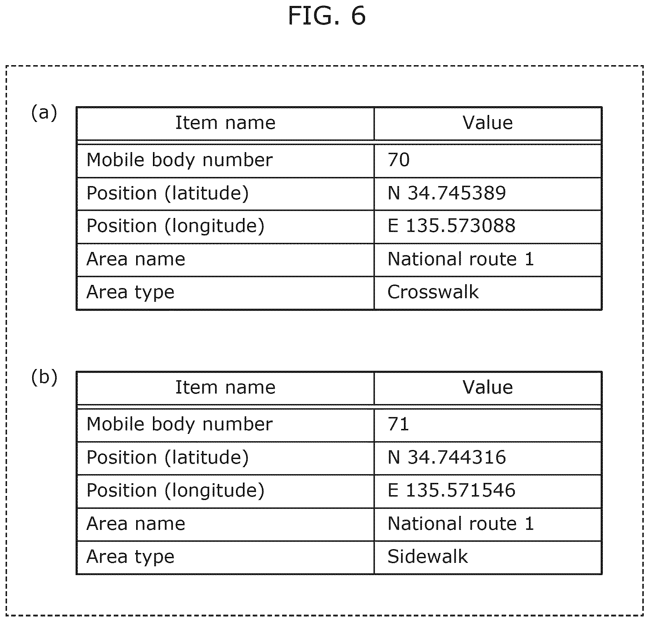

   FIG. 6 is a diagram illustrating an example of position information.
[FIG. 7]

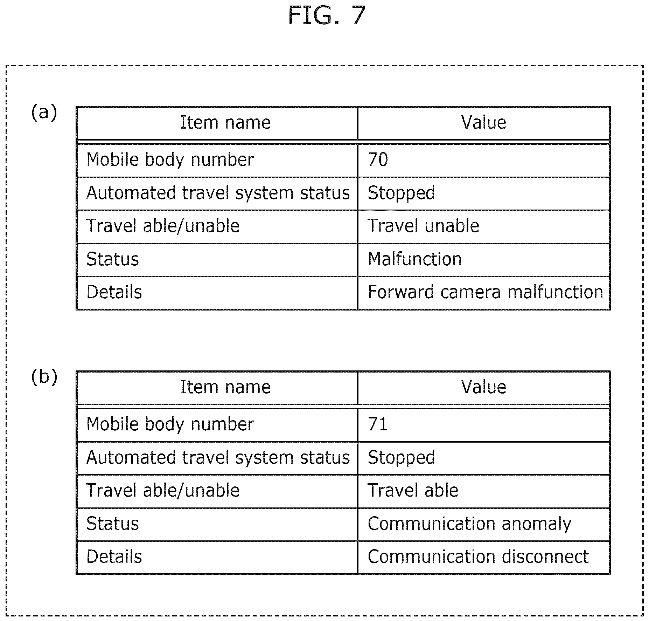

   FIG. 7 is a diagram illustrating an example of status information.
[FIG. 8]

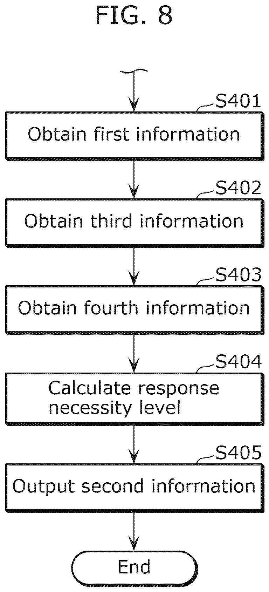

   FIG. 8 is a flowchart illustrating Example 1 of operations by the information processing system according to Embodiment 1.
[FIG. 9]

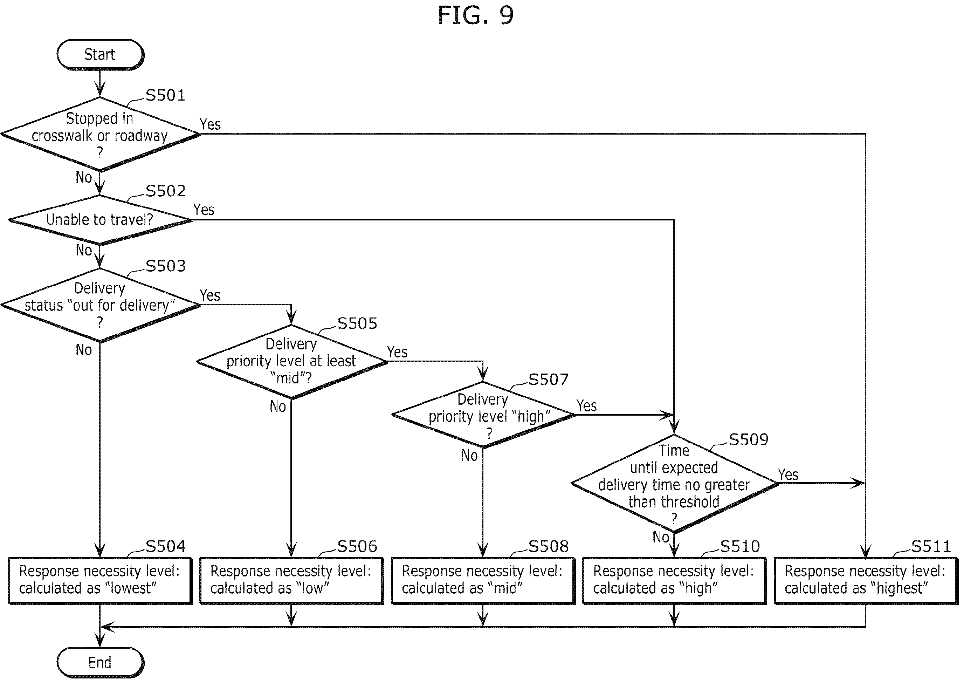

   FIG. 9 is a flowchart illustrating an example of operations for calculating the response necessity level in Example 1 of the operations.
[FIG. 10]

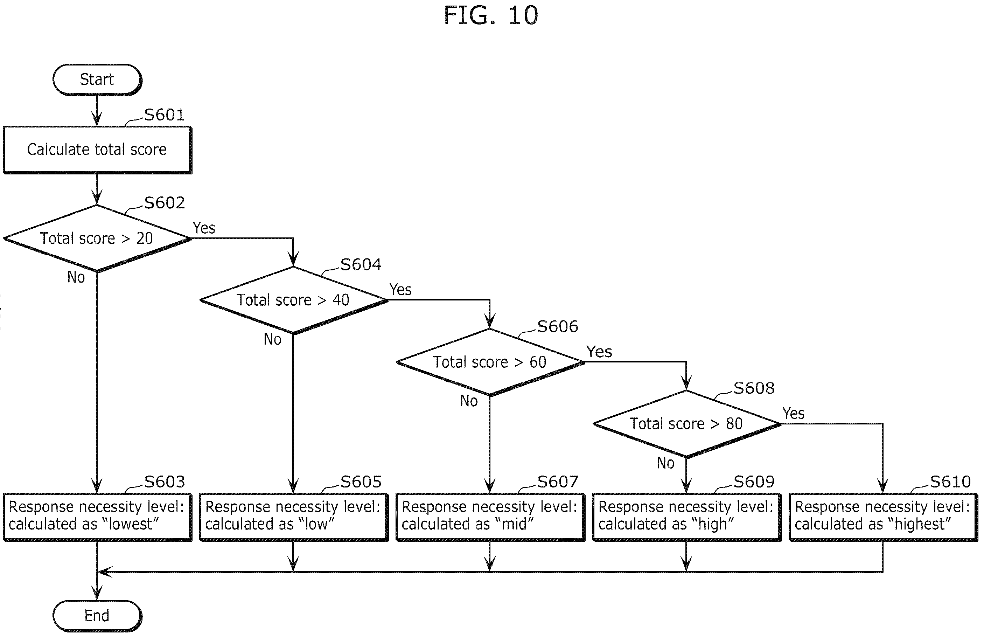

   FIG. 10 is a flowchart illustrating another example of operations for calculating the response necessity level in Example 1 of the operations.
[FIG. 11]

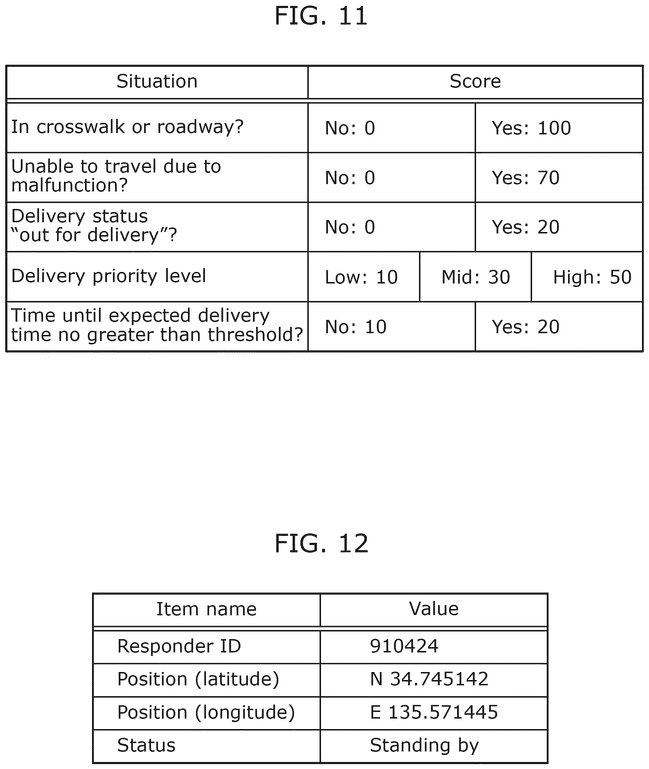

   FIG. 11 is a diagram illustrating an example of the evaluation of a situation that has arisen in a mobile body.
[FIG. 12]
   FIG. 12 is a diagram illustrating an example of responder information.
[FIG. 13]

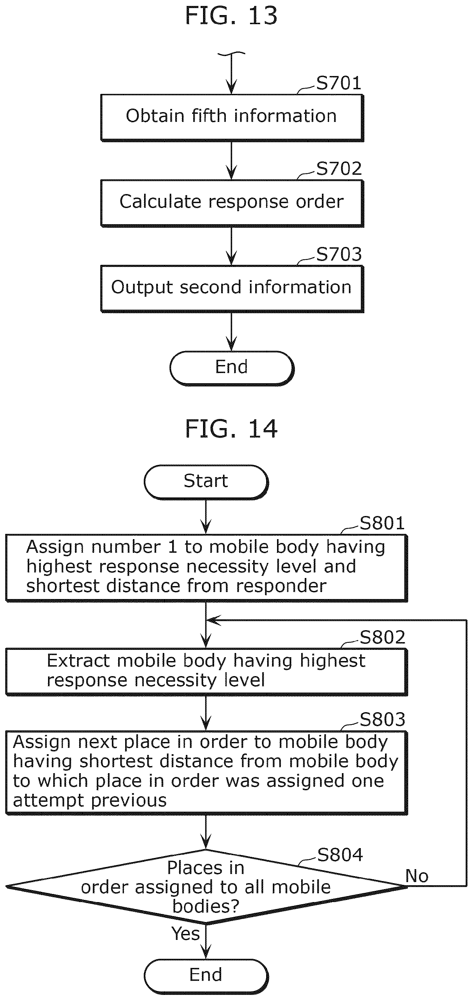

   FIG. 13 is a flowchart illustrating Example 2 of operations by the information processing system according to Embodiment 1.
[FIG. 14]
   FIG. 14 is a flowchart illustrating an example of calculating a response order in Example 2 of the operations.
[FIG. 15]

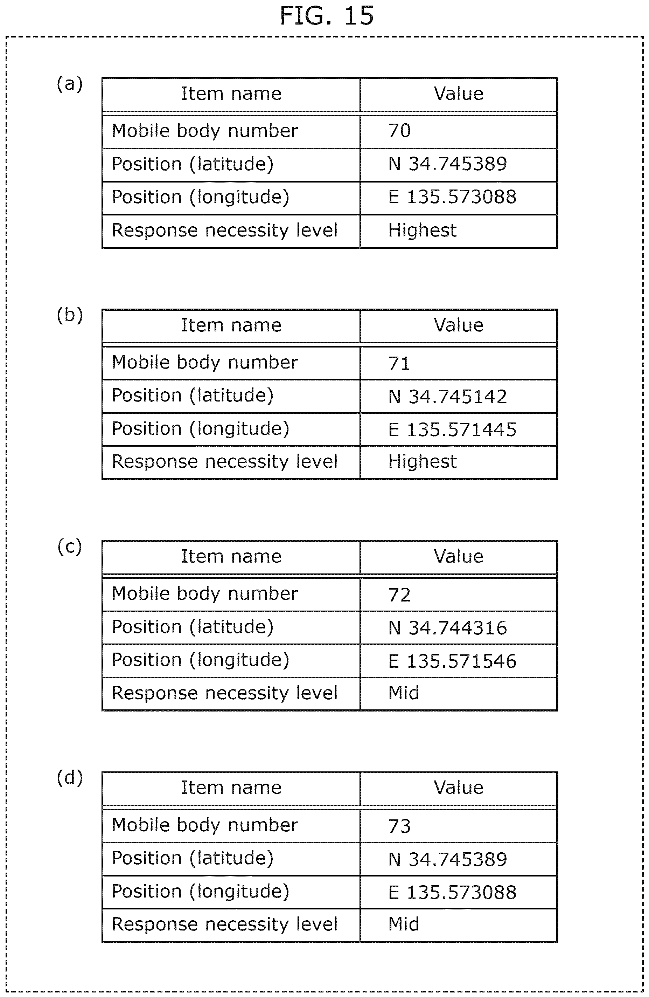

   FIG. 15 is a diagram illustrating an example of the position information and the response necessity level.
[FIG. 16]

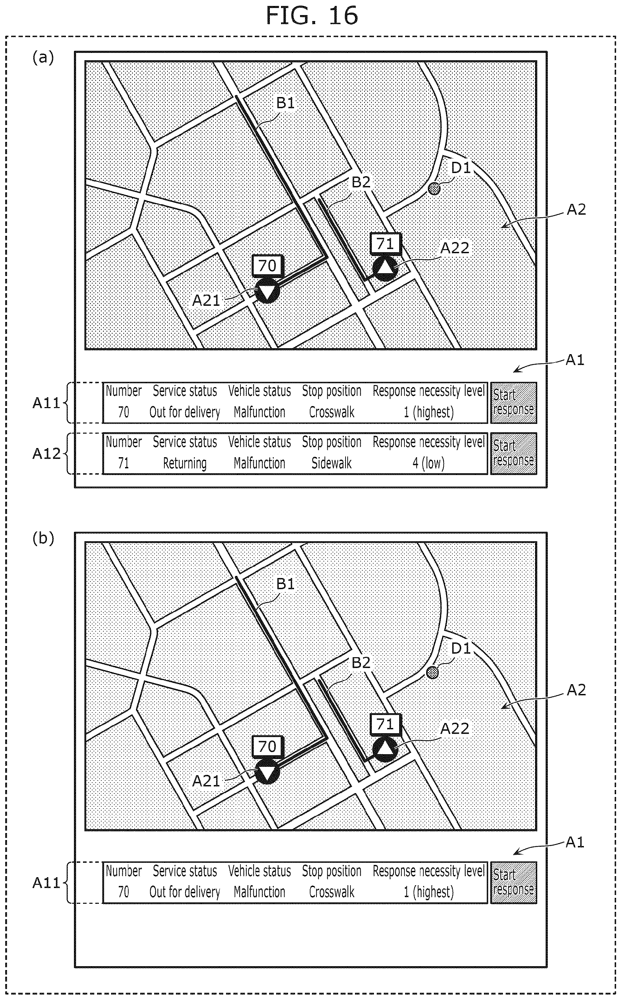

   FIG. 16 is a diagram illustrating Example 1 of an image displayed in a display of an information terminal.
[FIG. 17]

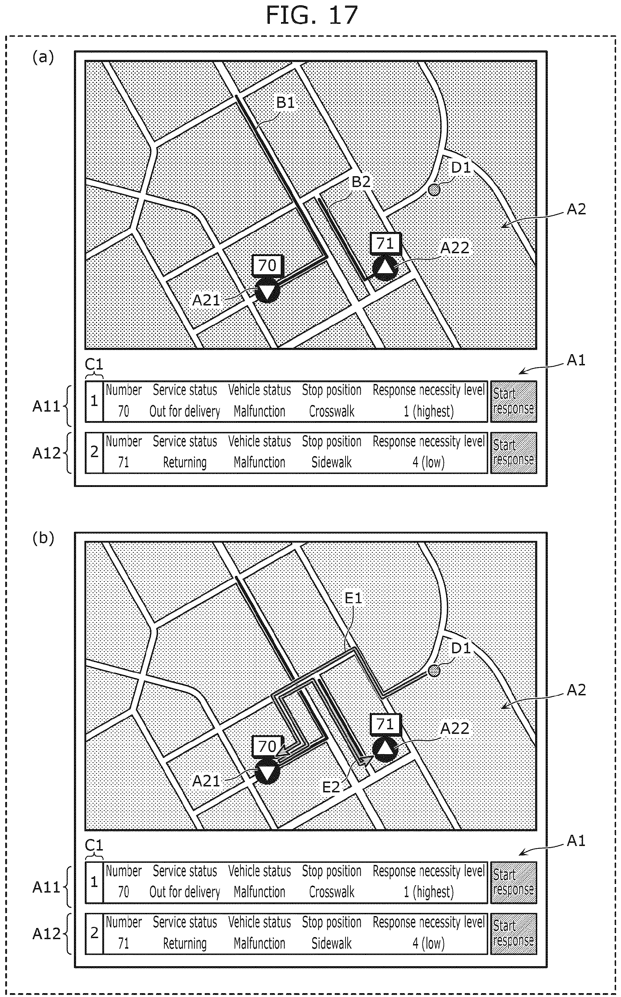

   FIG. 17 is a diagram illustrating Example 2 of an image displayed in a display of an information terminal.
[FIG. 18]

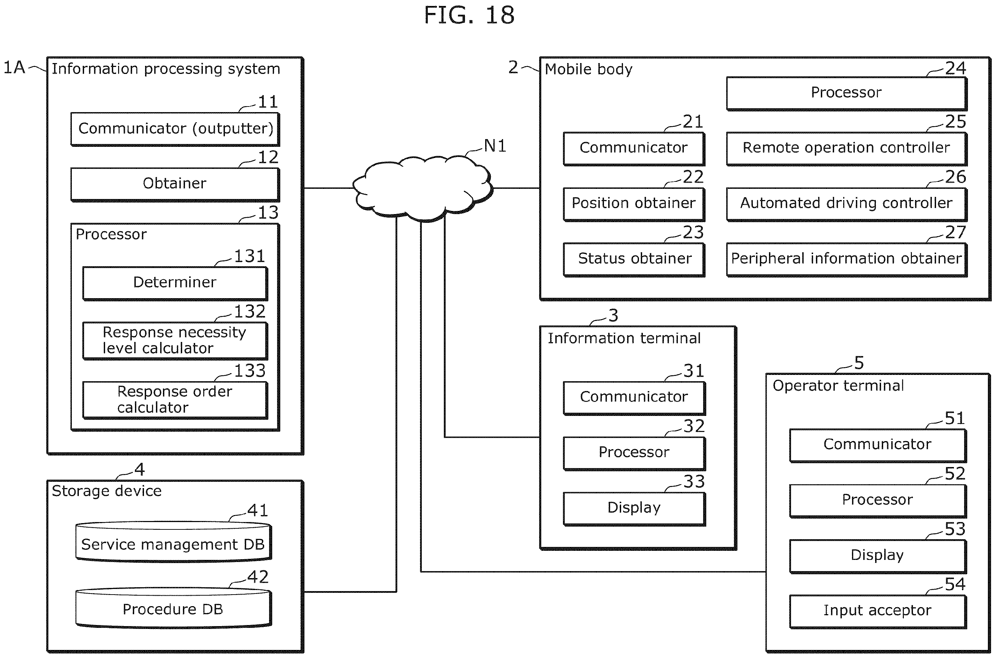

   FIG. 18 is a block diagram illustrating an example of an information processing system according to Embodiment 2.
[FIG. 19]

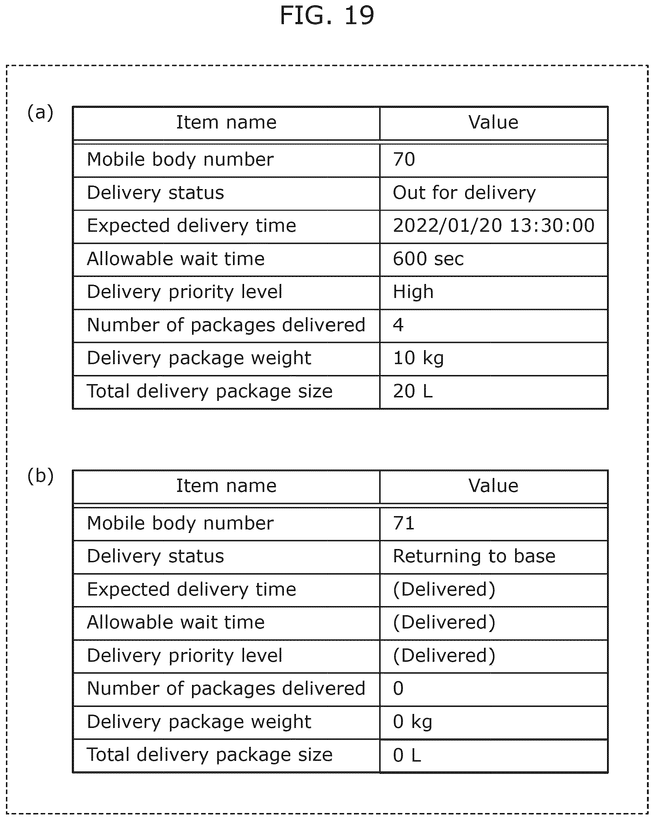

   FIG. 19 is a diagram illustrating another example of service information.
[FIG. 20]

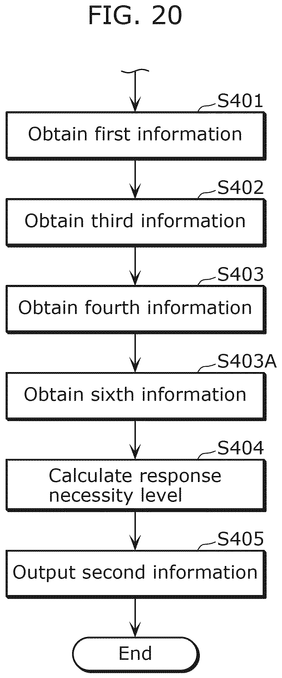

   FIG. 20 is a flowchart illustrating Example 1 of operations by the information processing system according to Embodiment 2.
[FIG. 21]

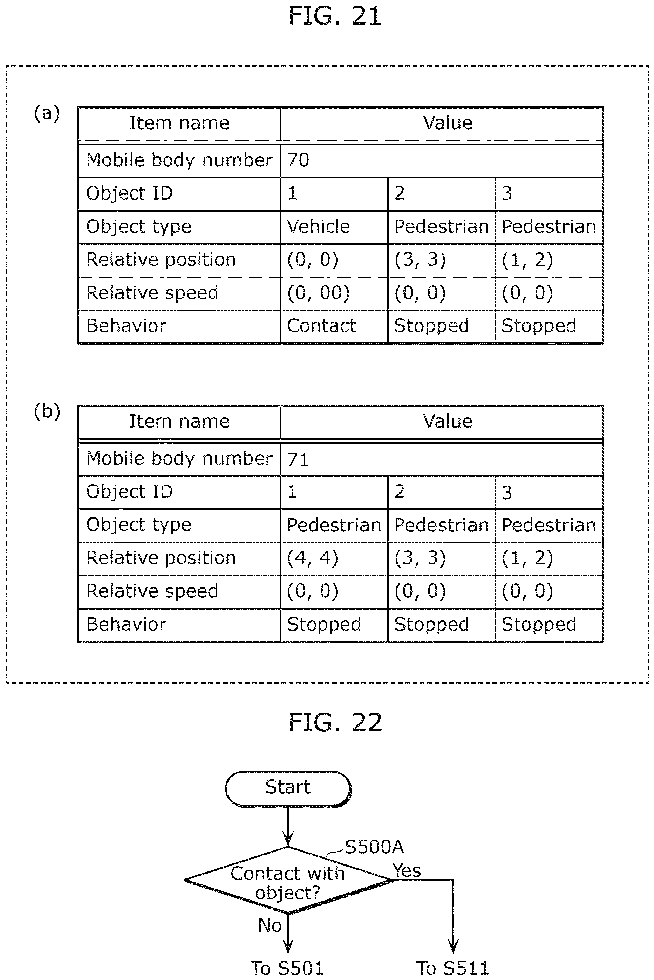

   FIG. 21 is a diagram illustrating an example of peripheral information.
[FIG. 22]
   FIG. 22 is a flowchart illustrating an example of operations for calculating the response necessity level in Example 1 of the operations.
[FIG. 23]

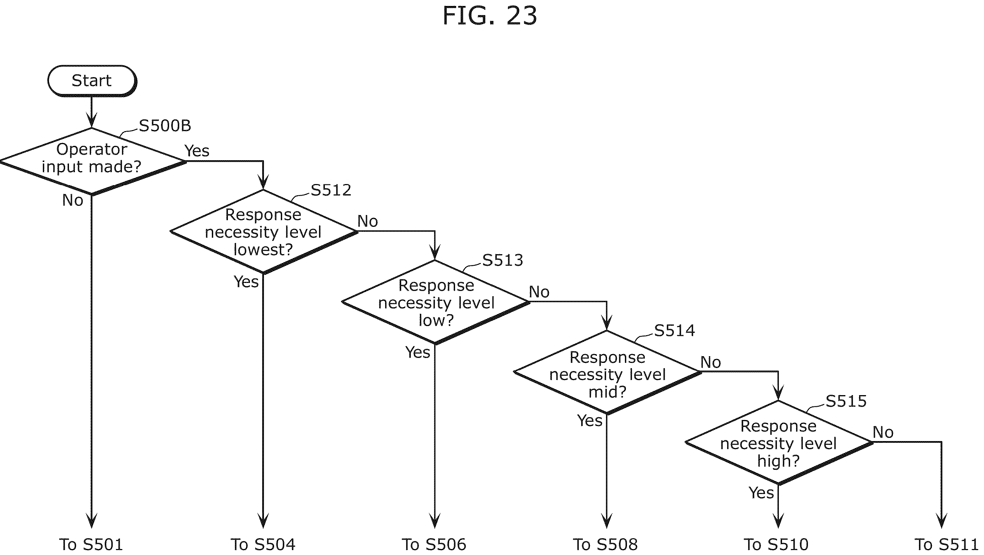

   FIG. 23 is a flowchart illustrating Example 2 of operations by the information processing system according to Embodiment 2.
[FIG. 24]

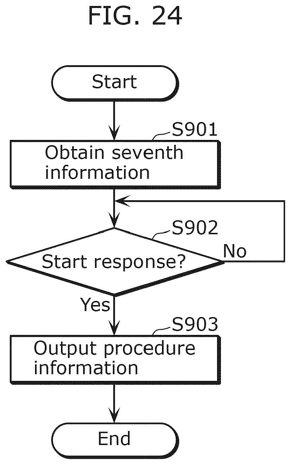

   FIG. 24 is a flowchart illustrating Example 3 of operations by the information processing system according to Embodiment 2.
[FIG. 25]

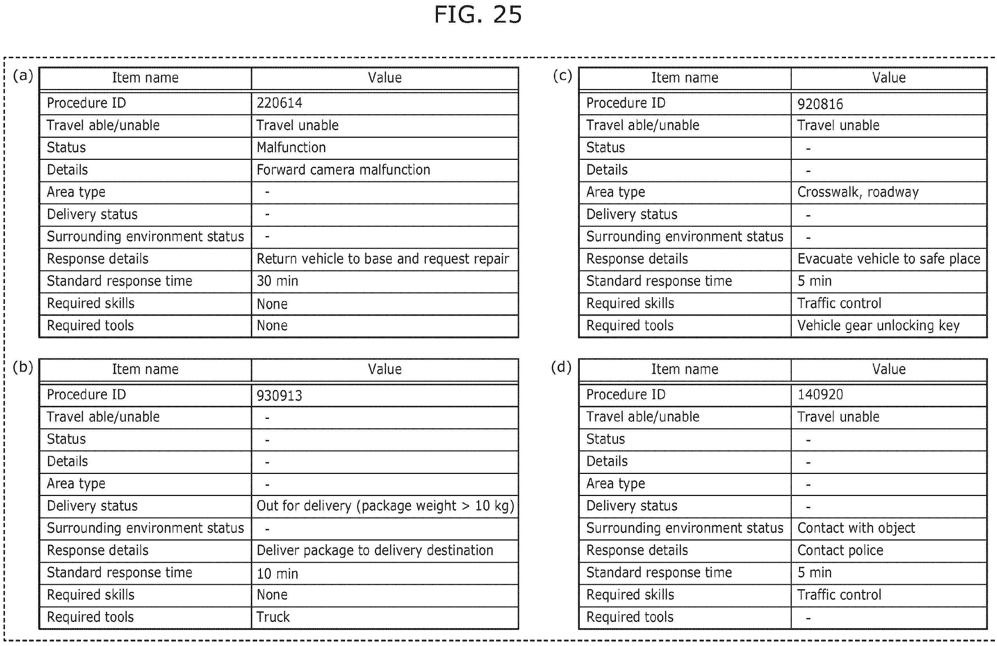

   FIG. 25 is a diagram illustrating an example of procedure information.
[FIG. 26]

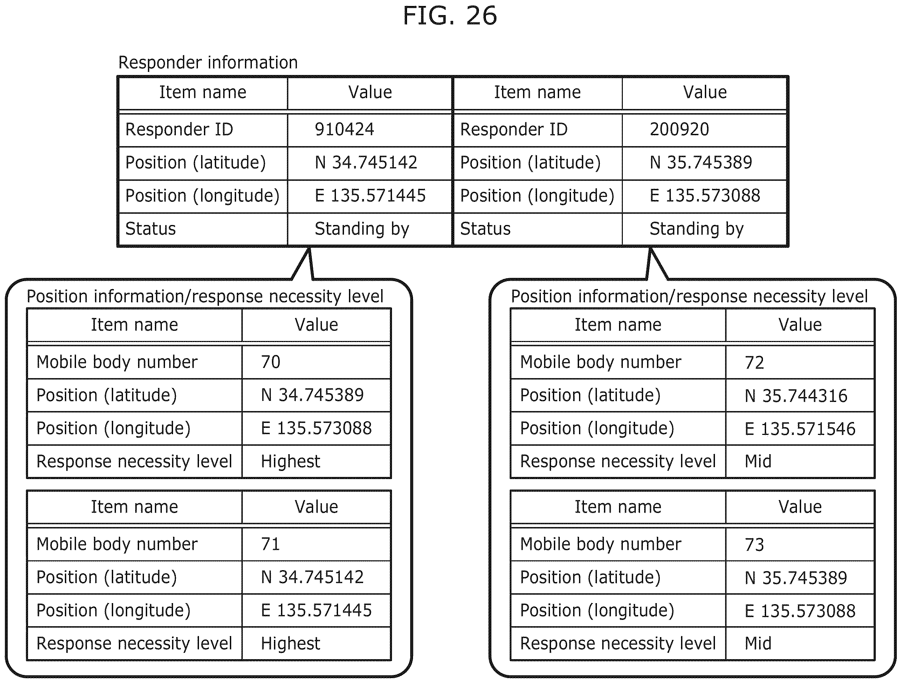

   FIG. 26 is a diagram illustrating an example of responder assignment.
[FIG. 27]

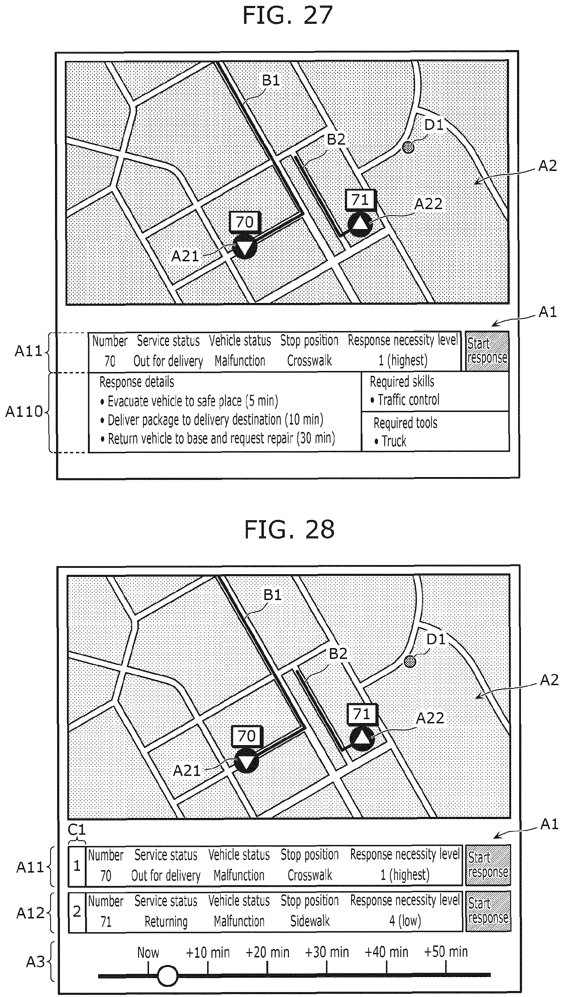

   FIG. 27 is a diagram illustrating Example 3 of an image displayed in a display of an information terminal.
[FIG. 28]
   FIG. 28 is a diagram illustrating Example 4 of an image displayed in a display of an information terminal.
[FIG. 29]

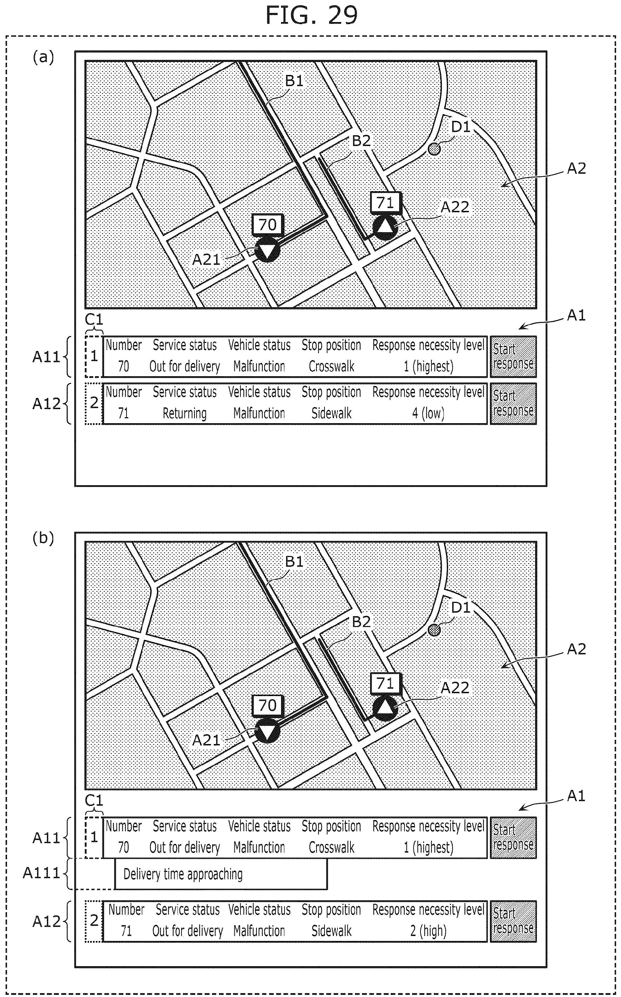

   FIG. 29 is a diagram illustrating Example 5 of an image displayed in a display of an information terminal.
[FIG. 30]

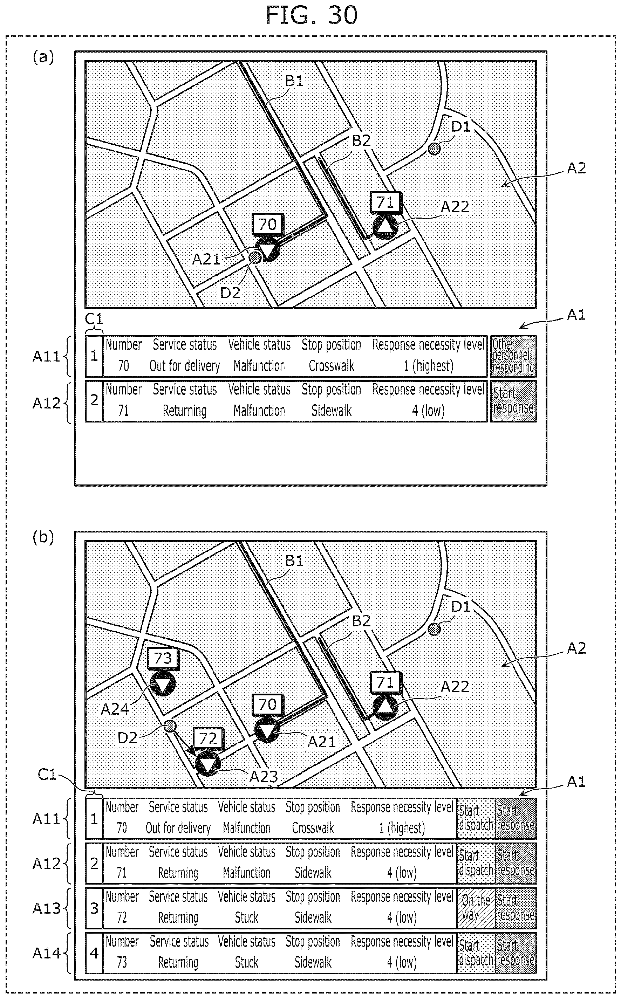

   FIG. 30 is a diagram illustrating Example 6 of an image displayed in a display of an information terminal.
[FIG. 31]

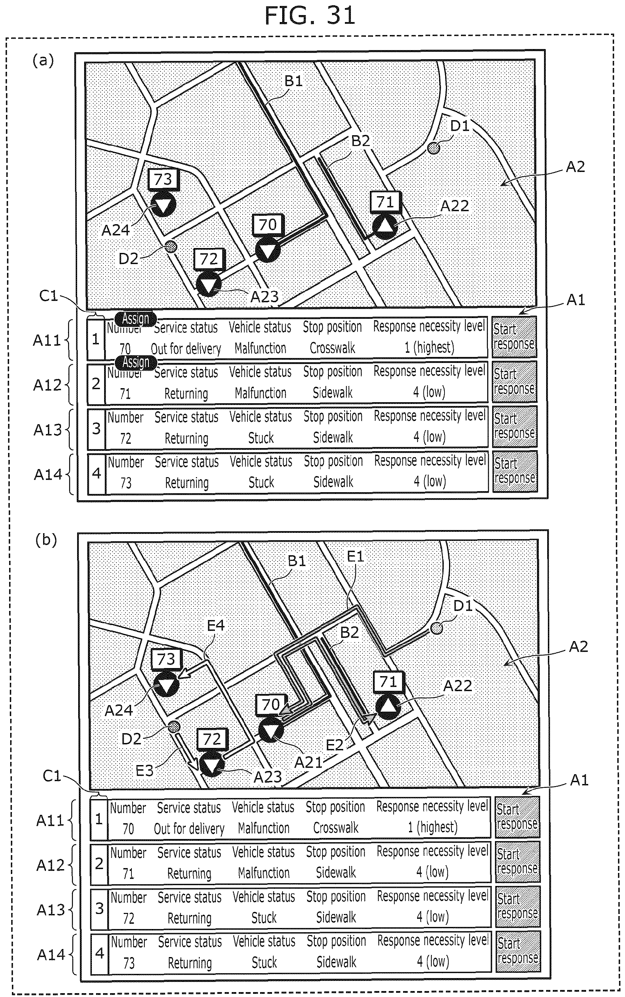

   FIG. 31 is a diagram illustrating Example 7 of an image displayed in a display of an information terminal.
[FIG. 32]

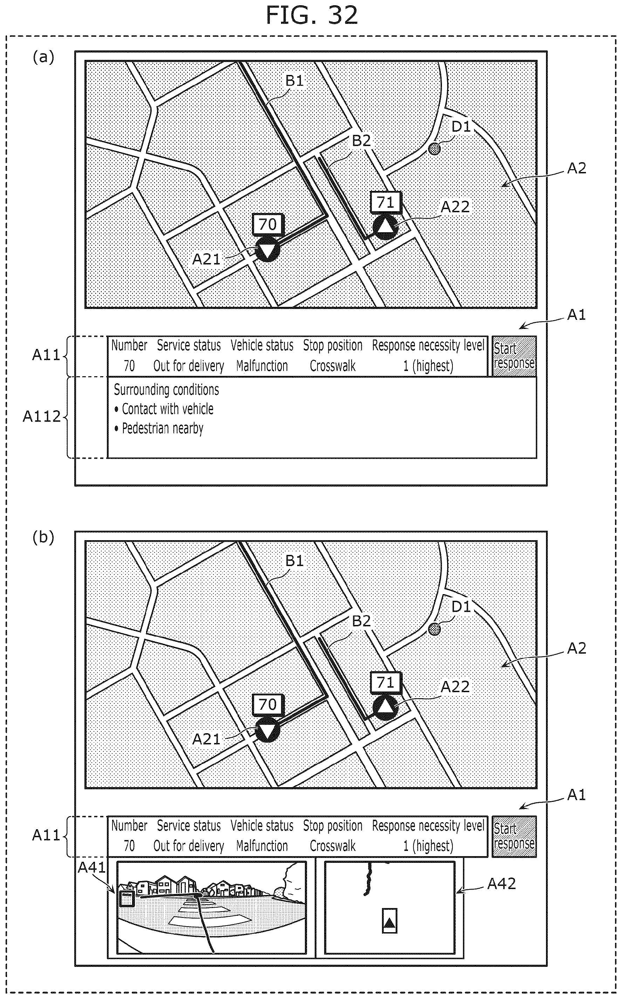

   FIG. 32 is a diagram illustrating Example 8 of an image displayed in a display of an information terminal.
[FIG. 33]

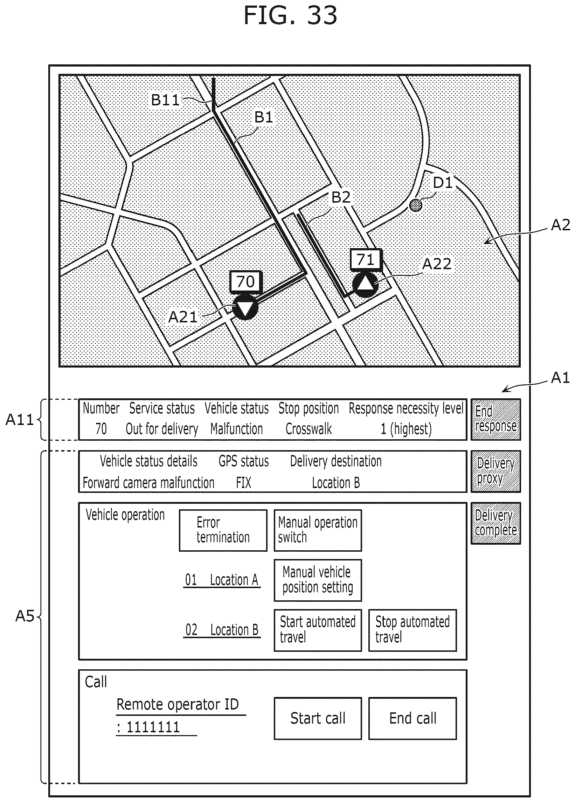

   FIG. 33 is a diagram illustrating Example 9 of an image displayed in a display of an information terminal.
[FIG. 34]

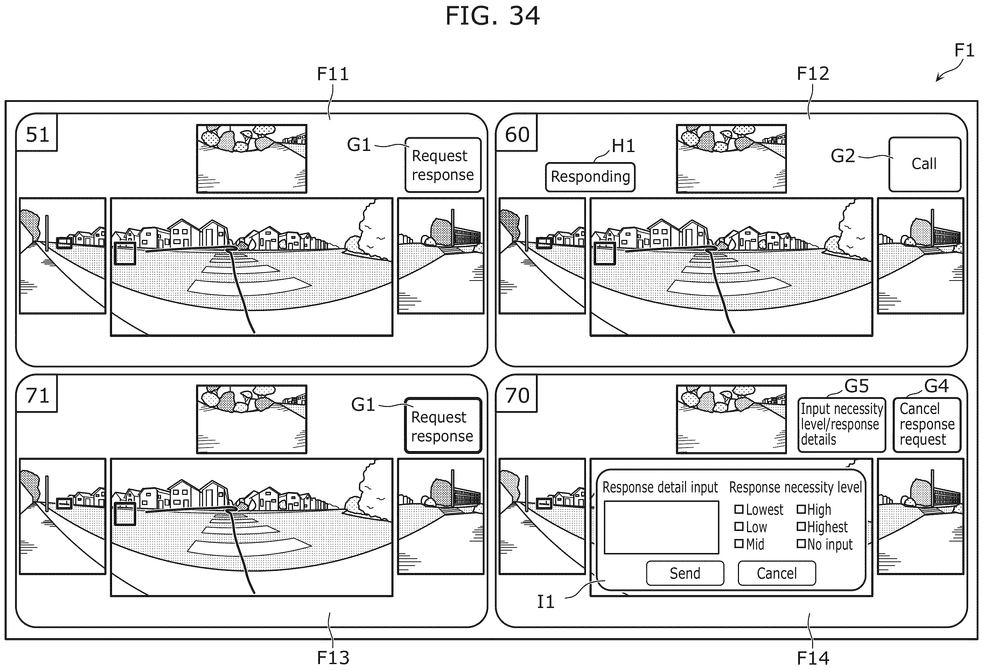

   FIG. 34 is a diagram illustrating an example of an image displayed in a display of an operator terminal.

### [Description of Embodiments]

An information processing method according to one aspect of the present disclosure is an information processing method executed by a computer, the information processing method including: obtaining first information related to a service executed by each of at least one mobile body, among a plurality of mobile bodies that move autonomously, when an event to which a responder is to respond by traveling to a position of the at least one mobile body is occurring in the at least one mobile body; calculating, based on the first information obtained, a response necessity level indicating a degree of a necessity to respond to the event, for each of the at least one mobile body; and outputting second information related to the response necessity level calculated.

Through this, when, for example, an event is occurring in each of the plurality of mobile bodies, the responder can determine which mobile body to start the response from preferentially by referring to the second information. This provides an advantage in that when a situation where each of a plurality of mobile bodies is having difficulty moving autonomously has occurred, it is easy for a responder to improve the situation efficiently.

For example, third information related to a status of each of the plurality of mobile bodies may further be obtained; and, based on the third information obtained, whether the event is occurring in each of the plurality of mobile bodies may further be determined.

Through this, information indicating that an event is occurring in each of the at least one mobile body can be obtained by the system itself.

For example, the third information may include information indicating whether each of the plurality of mobile bodies is capable of moving autonomously.

Through this, it is easier to determine whether an event is occurring in each of the at least one mobile body.

For example, the plurality of mobile bodies may be capable of moving in response to a remote operation by an operator, and the third information may include information indicating whether each of the plurality of mobile bodies is capable of communicating with the operator.

Through this, whether an event is occurring can be determined even for a mobile body capable of moving in response to remote operations by the operator.

For example, the first information may include information indicating whether the service is in progress, information indicating an expected completion time of the service, or information indicating a priority level of the service, for each of the at least one mobile body.

Through this, it is easy to improve the accuracy of the calculation of the response necessity level for each of the at least one mobile body.

For example, third information related to a status of each of the at least one mobile body and fourth information related to the position of each of the at least one mobile body may further be obtained; and the response necessity level may be calculated for each of the at least one mobile body based further on the third information and the fourth information obtained.

Through this, it is easy to improve the accuracy of the calculation of the response necessity level for each of the at least one mobile body.

For example, fifth information related to a position of the responder may further be obtained; and a response order in which the responder is to respond to the at least one mobile body may further be calculated based on the response necessity level calculated, the fourth information obtained, and the fifth information obtained.

Through this, when, for example, an event is occurring in each of the plurality of mobile bodies, referring to the response order eliminates the need for the responder to determine which mobile body to start the response from preferentially him/herself.

For example, sixth information related to whether an object is present in a vicinity of each of the at least one mobile body may further be obtained; and the response necessity level may be calculated for each of the at least one mobile body based further on the sixth information obtained.

Through this, it is easy to improve the accuracy of the calculation of the response necessity level for each of the at least one mobile body.

For example, operator input information including the response necessity level, the response necessity level being specified by an operator, may further be obtained; and the response necessity level may be calculated for each of the at least one mobile body based further on the operator input information obtained.

Through this, the response necessity level for each of the at least one mobile body can be calculated while taking into account instructions from the operator.

For example, the second information may further be output to an information terminal used by the responder, and the second information may be displayed on a display included in the information terminal.

Through this, by viewing the display of the information terminal, the responder can determine which mobile body to start the response from preferentially.

For example, information indicating the response necessity level of each of the at least one mobile body and a map indicating the position of each of the at least one mobile body may be displayed on the display.

Through this, by viewing the display of the information terminal, it is easier for the responder to determine which mobile body to start the response from preferentially.

For example, fifth information related to a position of the responder may further be obtained, a response order in which the responder is to respond to the at least one mobile body may further be calculated based on the response necessity level calculated and the fifth information obtained, and information indicating the response order may further be displayed on the display.

Through this, by viewing the display of the information terminal, the responder need not determine which mobile body to start the response from preferentially him/herself.

For example, when, using the information terminal, the responder makes an input indicating the responder will respond to one mobile body among the at least one mobile body, response underway information indicating a response to the one mobile body is underway, may further be output to an operator terminal used by an operator, and an image captured by the one mobile body and the response underway information may be displayed in a display included in the operator terminal.

Through this, by viewing the display of the operator terminal, the operator can ascertain to which mobile body the responder is currently responding.

A program according to one aspect of the present disclosure causes a computer to execute the information processing method described above.

Through this, when, for example, an event is occurring in each of the plurality of mobile bodies, the responder can determine which mobile body to start the response from preferentially by referring to the second information. This provides an advantage in that when a situation where each of a plurality of mobile bodies is having difficulty moving autonomously has occurred, it is easy for a responder to improve the situation efficiently.

An information processing system according to one aspect of the present disclosure includes an obtainer, a processor, and an outputter. The obtainer obtains first information related to a service executed by each of at least one mobile body, among a plurality of mobile bodies that move autonomously, when an event to which a responder is to respond by traveling to a position of the at least one mobile body is occurring in the at least one mobile body. The processor calculates, based on the first information obtained by the obtainer, a response necessity level indicating a degree of a necessity to respond to the event, for each of the at least one mobile body. The outputter outputs second information related to the response necessity level calculated by the processor.

Through this, when, for example, an event is occurring in each of the plurality of mobile bodies, the responder can determine which mobile body to start the response from preferentially by referring to the second information. This provides an advantage in that when a situation where each of a plurality of mobile bodies is having difficulty moving autonomously has occurred, it is easy for a responder to improve the situation efficiently.

Embodiments will be described in detail hereinafter with reference to the drawings.

The following embodiments will describe general or specific examples. The numerical values, shapes, materials, constituent elements, arrangements and connection states of constituent elements, steps, orders of steps, and the like in the following embodiments are merely examples, and are not intended to limit the present disclosure.

### [Embodiment 1]

An information processing system and an information processing method according to Embodiment 1 will be described hereinafter.

### 1. Configuration

FIG. 1 is a block diagram illustrating an example of information processing system 1 according to Embodiment 1. Information processing system 1 is a system for outputting information related to mobile body 2 that moves autonomously.

Mobile body 2 includes an autonomously-moving robot, such as, for example, an automated delivery robot. Mobile body 2 may be any autonomously-moving type, and may include, for example, a vehicle other than a robot, such as an automobile or an automated two-wheeled vehicle. In Embodiment 1, mobile body 2 is not fully autonomously-moving, and is monitored by an operator remotely through a remote control system. Mobile body 2 can in some cases be moved by a remote operation made by the operator through the remote control system. The following descriptions will assume that mobile body 2 is an automated delivery robot, and in particular, an automated delivery robot that moves on a sidewalk rather than a roadway. Of course, mobile body 2 may be an automated delivery robot that moves on a roadway.

Here, the remote control system is operated in a remote control center where multiple operators are present, or in a server device, and is a system for each operator to remotely monitor, and in some cases, remotely operate, a plurality of mobile bodies 2. Each operator uses an operator terminal, constituted by an information terminal such as a personal computer or the like, for example, to monitor the situation of each mobile body 2 displayed in the display provided in the operator terminal. For example, if a request for remote operation is made from mobile body 2, or if mobile body 2 is determined to be in a state where mobile body 2 should be operated remotely, the corresponding operator operates mobile body 2 remotely.

Information processing system 1 is an example of a computer that executes an information processing method. The constituent elements constituting information processing system 1 may be provided in a single housing, or may be distributed. If the constituent elements constituting information processing system 1 are distributed, the information processing method may be executed by a plurality of computers. In Embodiment 1, information processing system 1 is implemented by a server device.

As illustrated in FIG. 1, mobile body 2 includes communicator 21, position obtainer 22, status obtainer 23, processor 24, remote operation controller 25, and automated driving controller 26. Communicator 21, position obtainer 22, status obtainer 23, processor 24, remote operation controller 25, and automated driving controller 26 are realized by a processor that executes programs stored in a memory, a communication interface, and the like. The memory is a Read-Only Memory (ROM), a Random Access Memory (RAM), and the like, which can store the programs executed by the processor.

Communicator 21 is a wireless communication interface for communicating with information processing system 1 over network N1, which is the Internet, for example. Communicator 21 transmits position information related to a position of mobile body 2 obtained by position obtainer 22 and status information related to a status of mobile body 2 obtained by status obtainer 23 to information processing system 1. Communicator 21 also receives an instruction signal indicating an instruction for mobile body 2 to be controlled remotely, sent, for example, from a remote control system.

Position obtainer 22 obtains the position information by detecting the position of mobile body 2. Position obtainer 22 detects the position of mobile body 2 based on a positioning result from a positioning system such as Global Positioning System (GPS).

Status obtainer 23 obtains the status information related to the status of mobile body 2. The status information may include information indicating whether mobile body 2 is moving autonomously, information indicating whether mobile body 2 is being remotely operated by an operator, information indicating whether mobile body 2 is standing by, or the like, for example. The status information can also include information indicating whether a malfunction is occurring in mobile body 2, information indicating whether mobile body 2 is stuck, or the like, for example. Status obtainer 23 obtains the status information by making a request for the status of mobile body 2 to processor 24, for example.

Processor 24 is the main controller of mobile body 2. Processor 24 manages and controls mobile body 2 as a whole by operating cooperatively with communicator 21, position obtainer 22, status obtainer 23, remote operation controller 25, and automated driving controller 26.

Remote operation controller 25 causes mobile body 2 to move autonomously by controlling mobile body 2 according to the content of instructions issued to mobile body 2 from the remote control system over network N1. As a result, mobile body 2 is remotely operated according to instructions from the operator.

Automated driving controller 26 causes mobile body 2 to move autonomously by controlling mobile body 2 according to the content of instructions issued to mobile body 2 from the remote control system over network N1. The instructions mentioned here are different from the aforementioned instructions from the operator. For example, if mobile body 2 is an automated delivery robot, automated driving controller 26 causes mobile body 2 to move autonomously according to instructions to move toward one or more delivery destinations.

As illustrated in FIG. 1, information processing system 1 includes communicator (outputter) 11, obtainer 12, and processor 13. Communicator 11, obtainer 12, and processor 13 are implemented by a processor that executes programs stored in a memory, a communication interface, and the like. The memory is a ROM, a RAM, and the like, which can store the programs executed by the processor. Information processing system 1 also reads out and refers to information stored in storage device 4 by communicating with storage device 4 over network N1. Note that storage device 4 may be provided in the same server device as information processing system 1.

Communicator 11 is a wireless communication interface for communicating with each of the plurality of mobile bodies 2 handled by information processing system 1 over network N1. Communicator 11 receives the position information and the status information transmitted from each mobile body 2. Although only one mobile body 2 is illustrated in FIG. 1, a plurality of mobile bodies 2 are actually present.

In addition, communicator 11 communicates with information terminal 3 used by a responder over network N1. Information terminal 3 is a terminal such as, for example, a smartphone, a tablet terminal, a personal computer, or the like. The following descriptions will assume that information terminal 3 is a smartphone. Although only one information terminal 3 is illustrated in FIG. 1, if, for example, a plurality of responders are present, a plurality of information terminals 3, one used by each of the plurality of responders, will be present as well. In this case, communicator 11 communicates with each of the plurality of information terminals 3.

Here, "responder" refers to a person who, when an event occurs in mobile body 2, proceeds to the position of mobile body 2 to respond to the event. The "event" is mobile body 2 falling into a situation where autonomous movement and remote operation become difficult. In other words, when an event occurs, mobile body 2 enters a state where it is difficult or impossible to move autonomously for some reason. In addition, when an event occurs, mobile body 2 enters a state where it is difficult or impossible to move even when operated remotely by the operator through the remote control system.

The event includes a situation where mobile body 2 becomes unable to travel, e.g., when some or all travel functions of mobile body 2 malfunction. The event also includes a situation where mobile body 2 can no longer be controlled remotely, e.g., when communication between the remote control system and mobile body 2 is interrupted.

Specifically, the responder resolves the event by proceeding to the position of mobile body 2 and manually driving mobile body 2 to an appropriate location, restoring mobile body 2 by eliminating an anomaly occurring in mobile body 2 (a device malfunction or the like, for example), recovering mobile body 2, or the like. In addition, if mobile body 2 is an automated delivery robot, the responder arranges for an alternative robot to continue the delivery.

In Embodiment 1, communicator 11 transmits information related to mobile body 2, and in particular, second information related to a response necessity level, to information terminal 3 over network N1. The response necessity level will be described later. In other words, communicator 11 also functions as an outputter that outputs the second information related to the response necessity level.

Here, as illustrated in FIG. 1, information terminal 3 includes communicator 31, processor 32, and display 33. Communicator 31 and processor 32 are implemented by a processor that executes programs stored in a memory, a communication interface, and the like. The memory is a ROM, a RAM, and the like, which can store the programs executed by the processor.

Communicator 31 is a wireless communication interface for communicating with information processing system 1 over network N1. Communicator 31 receives information related to mobile body 2 sent from information processing system 1, and in particular, the second information related to the response necessity level.

Processor 32 is the main controller of information terminal 3. Processor 32 manages and controls information terminal 3 as a whole by operating cooperatively with communicator 31 and display 33.

Display 33 is a liquid crystal display or the like, for example, and displays information processed by processor 32. In Embodiment 1, the second information is displayed in display 33. The specific form of the second information displayed in display 33 will be described in detail in "3. User Interface (UI)".

Returning to the descriptions of information processing system 1, obtainer 12 obtains various types of information through communicator 11 and network N1. Obtainer 12 obtains service information related to a service executed by each of at least one mobile body 2 where an event is occurring from service management database (DB) 41 in storage device 4 (described later). The service information for each of the at least one mobile body 2 where an event is occurring will also be referred to collectively as "first information" hereinafter.

FIG. 2 is a diagram illustrating an example of the service information. The service information illustrated in FIG. 2 is information related to a service when mobile body 2 is an automated delivery robot, i.e., information related to a service for delivering a package specified by a user to a specified location (e.g., the user's home). In FIG. 2, "mobile body number" indicates a unique number assigned to mobile body 2. Also, in FIG. 2, "delivery status" indicates whether mobile body 2 is out for delivery of a package or is returning to a base. Also, in FIG. 2, "expected delivery time" indicates an expected time at which mobile body 2 will deliver the specified package to the specified location. Also, in FIG. 2, "delivery priority level" indicates a priority level for delivering the specified package to the specified location, and is set by the user when the user uses the delivery service. For example, if the user uses the delivery service having paid an additional fee, the delivery priority level will be higher, whereas if the user does not specify a delivery date/time, the delivery priority level will be lower. Here, the delivery priority level is indicated as three levels, namely "low", "mid", and "high". Also, in FIG. 2, "number of packages delivered" indicates the number of packages to be delivered to the specified location. (a) in FIG. 2 indicates the service information for mobile body 2 assigned a mobile body number of "70", and (b) in FIG. 2 indicates the service information for mobile body 2 assigned a mobile body number of "71".

Obtainer 12 obtains the status information related to the status of mobile body 2 from each of the plurality of mobile bodies 2. The status information of each of the plurality of mobile bodies 2 will also be referred to collectively as "third information" hereinafter. Of the status information, information related to communication anomalies such as the interruption of communication between the remote control system and mobile body 2 can be obtained from the remote control system. In addition, if the communication status is one in which communication between information processing system 1 and mobile body 2 is possible but mobile body 2 cannot be operated remotely by the operator, the information related to communication anomalies may be obtained from mobile body 2.

Obtainer 12 obtains position information related to the position of mobile body 2 from each of the at least one mobile body 2 where an event is occurring. The position information for each of the at least one mobile body 2 where an event is occurring will also be referred to collectively as "fourth information" hereinafter. Obtainer 12 obtains responder information related to a responder from information terminal 3. Information related to the position of the responder is also included in the responder information. The information related to the position of the responder will also be referred to as "fifth information" hereinafter.

Processor 13 is the main controller of information processing system 1. Processor 13 manages and controls information processing system 1 as a whole by operating cooperatively with communicator 11 and obtainer 12. Processor 13 includes determiner 131, response necessity level calculator 132, and response order calculator 133. Determiner 131, response necessity level calculator 132, and response order calculator 133 are all implemented as functions executed by processor 13.

Determiner 131 determines, based on the third information obtained by obtainer 12, whether an event is occurring in each of the plurality of mobile bodies 2. Here, the third information includes information indicating whether each of the plurality of mobile bodies 2 is capable of moving autonomously. The third information also includes information indicating whether each of the plurality of mobile bodies 2 is capable of communicating with an operator, i.e., information indicating whether mobile body 2 is capable of being remotely operated by an operator. Determiner 131 determines, for each mobile body 2, whether an event is occurring, i.e., whether mobile body 2 has fallen into a situation where autonomous movement and remote operation are difficult, based on this information. The operations of determiner 131 will be described in detail in "2. Operations".

When an event is occurring in at least one mobile body 2 among the plurality of mobile bodies 2, response necessity level calculator 132 calculates, based on the first information obtained by obtainer 12, a response necessity level indicating the degree to which each of the at least one mobile body 2 should respond to the event. In other words, the response necessity level indicates the degree to which the event should be resolved preferentially based on the progress of the service executed by each of the at least one mobile body 2 (here, a delivery service). Accordingly, when, for example, an event is occurring in each of the plurality of mobile bodies 2, the responder can determine which mobile body 2 to start the response from preferentially by referring to the response necessity level.

As already described, the service information includes "delivery status," "expected delivery time," and "delivery priority level". In other words, the first information includes information indicating whether the service is in progress ("delivery status"), information indicating an expected completion time of the service ("expected delivery time"), or information indicating the priority level of the service ("delivery priority level"), for each of the at least one mobile body 2. Response necessity level calculator 132 calculates the response necessity level for each of the at least one mobile body 2 based on this information. The operations of response necessity level calculator 132 will be described in detail in "2. Operations".

Response order calculator 133 calculates a response order in which the responder should respond to the at least one mobile body 2 based on the response necessity level calculated by response necessity level calculator 132 and fifth information obtained by obtainer 12. In other words, response order calculator 133 calculates an order in which the responder should respond to at least one event that is occurring based on the response necessity level for each of the at least one mobile body 2 and a relative positional relationship between the responder and the at least one mobile body 2. Accordingly, when, for example, an event is occurring in each of the plurality of mobile bodies 2, referring to the response order eliminates the need for the responder to determine which mobile body 2 to start the response from preferentially him/herself. The operations of response order calculator 133 will be described in detail in "2-3. Example 2 of Operations" of "2. Operations".

Storage device 4 stores service management DB 41. Service management DB 41 stores the service information related to service executed by mobile body 2 for each mobile body 2. Service management DB 41 obtains and stores the service information of each mobile body 2 from an operation management server that controls the dispatch of mobile bodies 2, e.g., the remote control system or the like. The service information for each mobile body 2 stored in service management DB 41 is updated each time the service information of each mobile body 2 is obtained from the operation management server.

### 2. Operations

Operations performed by information processing system 1 according to Embodiment 1 will be described hereinafter.

### 2-1. Basic Operations

Basic operations performed by information processing system 1 will be described first with reference to FIG. 3. FIG. 3 is a flowchart illustrating an example of the basic operations by information processing system 1 according to Embodiment 1. First, obtainer 12 periodically obtains the third information, i.e., the status information of each of the plurality of mobile bodies 2 (S101). Next, determiner 131 of processor 13 determines, based on the third information obtained by obtainer 12, whether an event is occurring in each of the plurality of mobile bodies 2 (S102).

A specific example of the operations performed by determiner 131 will be described here with reference to FIG. 4. FIG. 4 is a flowchart illustrating an example of operations for determining whether a response by the responder is necessary in information processing system 1 according to Embodiment 1. Note that FIG. 4 illustrates determination operations performed for one mobile body 2. However, the determination operations illustrated in FIG. 4 are performed for each mobile body 2.

First, determiner 131 determines whether mobile body 2 can travel automatically (can move autonomously) by referring to the status information of mobile body 2 in question (S201). If mobile body 2 can travel automatically (S201: Yes), determiner 131 determines that an event is not occurring in mobile body 2 (S202). However, if mobile body 2 cannot travel automatically (S201), determiner 131 then determines whether mobile body 2 can be remotely operated (S203). If mobile body 2 can be remotely operated (S203: Yes), determiner 131 determines that an event is not occurring in mobile body 2 (S202). However, if mobile body 2 cannot be remotely operated (S203: No), determiner 131 determines that an event is occurring in mobile body 2 (S204).

Returning to FIG. 3, if an event is not occurring in any of mobile bodies 2 (S103: No), processor 13 does not execute any processing in particular. However, if an event is occurring in at least one mobile body 2 (S103: Yes), obtainer 12 obtains the first information, i.e., the service information, for each of the at least one mobile body 2 (S104). Then, response necessity level calculator 132 of processor 13 calculates the response necessity level for each of the at least one mobile body 2 based on the first information obtained (S105).

A specific example of the operations performed by response necessity level calculator 132 will be described here with reference to FIG. 5. FIG. 5 is a flowchart illustrating an example of operations for calculating the response necessity level in information processing system 1 according to Embodiment 1. Note that FIG. 5 illustrates calculation operations performed for one mobile body 2. The calculation operations illustrated in FIG. 5 are performed for each mobile body 2 in which an event is occurring. In the calculation operations illustrated in FIG. 5, response necessity level calculator 132 calculates the response necessity level of mobile body 2 in which the event is occurring as one of five levels, namely "lowest", "low", "mid", "high", and "highest". As an example, if it is necessary for the responder to proceed to mobile body 2 within five minutes, the response necessity level is "high"; if it is necessary for the responder to proceed to mobile body 2 within ten minutes, the response necessity level is "mid"; and if it is necessary for the responder to proceed to mobile body 2 within 15 minutes, the response necessity level is "low".

First, response necessity level calculator 132 confirms whether the delivery status of mobile body 2 is "out for delivery" by referring to the service information of mobile body 2 in question (S301). If the delivery status of mobile body 2 is not "out for delivery" (S301: No), response necessity level calculator 132 calculates the response necessity level of mobile body 2 as "lowest" (S302). However, if the delivery status of mobile body 2 is "out for delivery" (S301: Yes), response necessity level calculator 132 then confirms whether the delivery priority level of mobile body 2 is at least "mid" (S303).

If the delivery priority level of mobile body 2 is lower than "mid" (i.e., the delivery priority level is "low") (S303: No), response necessity level calculator 132 calculates the response necessity level of mobile body 2 as "low" (S304). However, if the delivery priority level of mobile body 2 is at least "mid" (S303: Yes), response necessity level calculator 132 then confirms whether the delivery priority level of mobile body 2 is "high" (S305).

If the delivery priority level of mobile body 2 is not "high" (i.e., if the delivery priority level is "mid") (S305: No), response necessity level calculator 132 calculates the response necessity level of mobile body 2 as "mid" (S306). However, if the delivery priority level of mobile body 2 is "high" (S305: Yes), response necessity level calculator 132 then confirms whether a length of time from the current time to the expected delivery time for mobile body 2 is not greater than a threshold (S307). The threshold is a length of time set in advance, e.g., ten minutes.

If the length of time from the current time to the expected delivery time for mobile body 2 is greater than the threshold (S307: No), response necessity level calculator 132 calculates the response necessity level of mobile body 2 as "high" (S308). However, if the length of time from the current time to the expected delivery time for mobile body 2 is not greater than the threshold (S307: Yes), response necessity level calculator 132 calculates the response necessity level of mobile body 2 as "highest" (S309).

Returning to FIG. 3, communicator (outputter) 11 outputs the second information related to the response necessity level calculated by response necessity level calculator 132 (S106). In Embodiment 1, communicator 11 outputs the second information by sending the second information to information terminal 3 used by the responder. Steps S101 to S106 described above are repeated while information processing system 1 is operating.

### 2-2. Example 1 of Operations

The following will describe Example 1 of operations that information processing system 1 can perform. Note that it is sufficient for information processing system 1 to be capable of performing the example of basic operations, and whether to perform Example 1 of the operations is optional. In Example 1 of the operations, response necessity level calculator 132 calculates the response necessity level for each of the at least one mobile body 2 by further referring to the third information and the fourth information, i.e., the position information and the status information of mobile body 2.

FIG. 6 is a diagram illustrating an example of the position information. In FIG. 6, "mobile body number" indicates the unique number assigned to mobile body 2. Also, in FIG. 6, "position (latitude)" indicates the latitude where mobile body 2 is located, and "position (longitude)" indicates the longitude where mobile body 2 is located. Also, in FIG. 6, "area name" indicates a name of an area where mobile body 2 is located (e.g., the name of a road or the like). Also, in FIG. 6, "area type" indicates a type of the area where mobile body 2 is located (e.g., a sidewalk, an intersection, a crosswalk, or the like). (a) in FIG. 6 indicates the position information for mobile body 2 assigned a mobile body number of "70", and (b) in FIG. 6 indicates the position information for mobile body 2 assigned a mobile body number of "71".

FIG. 7 is a diagram illustrating an example of the status information. In FIG. 7, "mobile body number" indicates the unique number assigned to mobile body 2. Also, in FIG. 7, "automated travel system status" indicates whether mobile body 2 is traveling automatically (moving autonomously) or is stopped. Also, in FIG. 7, "travel able/unable" indicates whether mobile body 2 is capable of traveling, i.e., whether mobile body 2 is unable to move autonomously and be operated remotely but is capable of travel when driven manually. Also, in FIG. 7, "status" indicates a status of the system of mobile body 2 (e.g., "normal", "malfunction", "communication anomaly", or the like). Also, in FIG. 7, "details" indicates details of the status of the system of mobile body 2. For example, if "status" is "malfunction", "details" indicates which part in particularly has malfunctioned. Also, for example, if "status" is "communication anomaly", "details" indicates the specific kind of communication anomaly. (a) in FIG. 7 indicates the status information for mobile body 2 assigned a mobile body number of "70", and (b) in FIG. 7 indicates the status information for mobile body 2 assigned a mobile body number of "71".

FIG. 8 is a flowchart illustrating Example 1 of the operations by information processing system 1 according to Embodiment 1. Steps S101 to S103 of the basic operation example are omitted in FIG. 8. In other words, in Example 1 of the operations, information processing system 1 executes steps S401 to S405 of FIG. 8 instead of steps S104 to S106 described in the example of basic operations.

First, obtainer 12 obtains the first information, i.e., the service information of each of the at least one mobile body 2 (S401). Next, obtainer 12 obtains the third information, i.e., the position information of each of the at least one mobile body 2 (S402). Next, obtainer 12 obtains the fourth information, i.e., the status information of each of the at least one mobile body 2 (S403). Steps S401 to S403 do not necessarily have to be executed in this order. Then, response necessity level calculator 132 calculates the response necessity level for each of the at least one mobile body 2 based on the first information, the third information, and the fourth information obtained (S404). Then, communicator (outputter) 11 outputs the second information related to the response necessity level calculated by response necessity level calculator 132 (S405).

A specific example of the operations performed by response necessity level calculator 132 in Example 1 of the operations will be described here with reference to FIG. 9. FIG. 9 is a flowchart illustrating an example of operations for calculating the response necessity level in Example 1 of the operations.

First, response necessity level calculator 132 confirms whether mobile body 2 is stopped in a crosswalk or a roadway by referring to the position information of mobile body 2 in question (S501). If mobile body 2 is stopped in a crosswalk or roadway (S501: Yes), response necessity level calculator 132 calculates the response necessity level of mobile body 2 as "highest" (S511). However, if mobile body 2 is stopped in neither a crosswalk nor a roadway (S501: No), response necessity level calculator 132 then confirms whether mobile body 2 is unable to travel by referring to the status information of mobile body 2 in question (S502).

If mobile body 2 is unable to travel (S502: Yes), response necessity level calculator 132 executes step S509 (described later). However, if mobile body 2 is capable of travel (S502: No), response necessity level calculator 132 then confirms whether the delivery status of mobile body 2 is "out for delivery" by referring to the service information of mobile body 2 in question (S503).

If the delivery status of mobile body 2 is not "out for delivery" (S503: No), response necessity level calculator 132 calculates the response necessity level of mobile body 2 as "lowest" (S504). However, if the delivery status of mobile body 2 is "out for delivery" (S503: Yes), response necessity level calculator 132 then confirms whether the delivery priority level of mobile body 2 is at least "mid" (S505).

If the delivery priority level of mobile body 2 is lower than "mid" (i.e., the delivery priority level is "low") (S505: No), response necessity level calculator 132 calculates the response necessity level of mobile body 2 as "low" (S506). However, if the delivery priority level of mobile body 2 is at least "mid" (S505: Yes), response necessity level calculator 132 then confirms whether the delivery priority level of mobile body 2 is "high" (S507).

If the delivery priority level of mobile body 2 is not "high" (i.e., if the delivery priority level is "mid") (S507: No), response necessity level calculator 132 calculates the response necessity level of mobile body 2 as "mid" (S508). However, if the delivery priority level of mobile body 2 is "high" (S507: Yes), response necessity level calculator 132 then confirms whether a length of time from the current time to the expected delivery time for mobile body 2 is not greater than a threshold (S509). Step S509 is also performed when mobile body 2 is unable to travel, as described above.

If the length of time from the current time to the expected delivery time for mobile body 2 is greater than the threshold (S509: No), response necessity level calculator 132 calculates the response necessity level of mobile body 2 as "high" (S510). However, if the length of time from the current time to the expected delivery time for mobile body 2 is not greater than the threshold (S509: Yes), response necessity level calculator 132 calculates the response necessity level of mobile body 2 as "highest" (S511).

Incidentally, in Example 1 of the operations, response necessity level calculator 132 may evaluate a situation that has arisen in mobile body 2 as a score by referring to the service information, position information, and status information of mobile body 2 in question, and may calculate the response necessity level based on the score. FIG. 10 is a flowchart illustrating another example of operations for calculating the response necessity level in Example 1 of the operations. FIG. 11 is a diagram illustrating an example of the evaluation of a situation that has arisen in mobile body 2.

In FIG. 11, a situation where mobile body 2 is "in a crosswalk or roadway?" is evaluated as 100 points if "Yes", and 0 points if "No". Also, in FIG. 11, a situation where mobile body 2 is "unable to travel due to malfunction?" is evaluated as 70 points if "Yes", and 0 points if "No". Also, in FIG. 11, a situation where "delivery status is 'out for delivery'?" for mobile body 2 is evaluated as 20 points if "Yes", and 0 points if "No". Also, in FIG. 11, a situation for "delivery priority level" for mobile body 2 is evaluated as 50 points if "high", 30 points if "mid", and 10 points if "low". Also, in FIG. 11, a situation where "time until expected delivery time is not greater than threshold?" for mobile body 2 is evaluated as 20 points if "Yes", and 10 points if "No".

Then, as illustrated in FIG. 10, first, response necessity level calculator 132 calculates the total score for each situation of mobile body 2 in question (S601). Then, if the total score is not higher than 20 points (S602: No), response necessity level calculator 132 calculates the response necessity level of mobile body 2 as "lowest" (S603). If the total score is higher than 20 points (S602: Yes) but not higher than 40 points (S604: No), response necessity level calculator 132 calculates the response necessity level of mobile body 2 as "low" (S605). If the total score is higher than 40 points (S604: Yes) but not higher than 60 points (S606: No), response necessity level calculator 132 calculates the response necessity level of mobile body 2 as "mid" (S607). If the total score is higher than 60 points (S606: Yes) but not higher than 80 points (S608: No), response necessity level calculator 132 calculates the response necessity level of mobile body 2 as "high" (S609). If the total score is greater than 80 points (S608: Yes), response necessity level calculator 132 calculates the response necessity level of mobile body 2 as "highest" (S610).

### 2-3. Example 2 of Operations

The following will describe Example 2 of operations that information processing system 1 can perform. Note that it is sufficient for information processing system 1 to be capable of performing the example of basic operations, and whether to perform Example 2 of the operations is optional. If Example 2 of the operations is not performed, information processing system 1 need not include response order calculator 133.

In Example 2 of the operations, information processing system 1 calculates the response necessity level for each of the at least one mobile body 2, and then calculates the response order. In other words, in Example 2 of operations, response order calculator 133 calculates the response order based on the response necessity level for each of the at least one mobile body 2, the fourth information (i.e., the position of each of the at least one mobile body 2), and the fifth information (i.e., the position of the responder).

FIG. 12 is a diagram illustrating an example of the responder information. In FIG. 12, "responder ID" indicates a unique number assigned to the responder. Also, in FIG. 12, "position (latitude)" indicates the latitude where the responder is located, and "position (longitude)" indicates the longitude where the responder is located. Also, in FIG. 12, "status" indicates the status of the responder (e.g., standing by, patrolling, responding, or the like).

FIG. 13 is a flowchart illustrating Example 2 of the operations by information processing system 1 according to Embodiment 1. FIG. 13 illustrates only the flow after execution of each step in Example 1 of the operations (excluding the step of outputting the second information). In other words, in Example 2 of the operations, information processing system 1 executes steps S701 to S703 of FIG. 13 instead of step S405 after executing steps S401 to S404 of Example 1 of the operations.

First, obtainer 12 obtains the fifth information, i.e., information related to the position of the responder (S701). Here, obtainer 12 obtains the information related to the position of the responder by obtaining the responder information from information terminal 3 through communicator 11. Although it is assumed here that one responder is present, but if a plurality of responders are present, obtainer 12 obtains the information related to the position of the responder for each responder.

Next, response order calculator 133 of processor 13 calculates the response order based on the response necessity level for each of the at least one mobile body 2 calculated by response necessity level calculator 132, the fourth information obtained by obtainer 12 (see step S403 of Example 1 of the operations), and the fifth information obtained by obtainer 12 (S702). Then, communicator (outputter) 11 outputs the second information related to the response necessity level calculated by response necessity level calculator 132 (S703). Here, the second information also includes the response order calculated based on the response necessity level.

A specific example of the operations performed by response order calculator 133 in Example 2 of the operations will be described here with reference to FIG. 14. FIG. 14 is a flowchart illustrating an example of calculating the response order in Example 2 of the operations. First, of the at least one mobile body 2, response order calculator 133 assigns "#1" to mobile body 2 having the highest response necessity level and the shortest distance from the responder (S801). Here, if a plurality of responders are present, response order calculator 133 determines the responder, among the plurality of responders, having the shortest distance from mobile body 2 that has the highest response necessity level, as the responder to respond to the at least one mobile body 2.

Next, response order calculator 133 extracts mobile body 2 having the highest response necessity level among the remaining mobile bodies 2 (S802). Then, response order calculator 133 assigns the next place in the order to mobile body 2, among the extracted mobile bodies 2, having the shortest distance from mobile body 2 to which the place in the order was assigned in the attempt one previous (S803). For example, if mobile body 2 to which the place in the order was assigned in the attempt one previous is mobile body 2 to which "#1" is assigned, then mobile body 2 having the shortest distance from that mobile body 2 is assigned "#2".

Thereafter, if a place in the order is not assigned to all mobile bodies 2 (S804: No), response order calculator 133 repeats steps S802 and S803. Then, once a place in the order is assigned to all mobile bodies 2 (S804: Yes), response order calculator 133 ends the processing for calculating the response order.

A specific example of calculating the response order by response order calculator 133 will be described here with reference to positions and response necessity levels of four mobile bodies 2 illustrated in FIG. 15, and the position of the responder illustrated in FIG. 12. FIG. 15 is a diagram illustrating an example of the position information and the response necessity level. (a) in FIG. 15, (b) in FIG. 15, (c) in FIG. 15, and (d) in FIG. 15 indicate the positions and response necessity levels of mobile bodies 2 having mobile body numbers of "70," "71," "72," and "73," respectively.

First, of the four mobile bodies 2, response order calculator 133 assigns "#1" to mobile body 2 having a mobile body number of "71", which is mobile body 2 having the highest response necessity level (here, mobile bodies 2 having mobile body numbers of "70" and "71") and the shortest distance from the responder. Next, response order calculator 133 extracts mobile body 2 having a mobile body number of "70", which is mobile body 2 having the highest response necessity level among the remaining mobile bodies 2 (here, the three mobile bodies 2 having mobile body numbers of "70", "72", and "73"). Here, since only one mobile body 2 is extracted, "#2" is assigned to mobile body 2 having a mobile body number of "70".

Next, response order calculator 133 extracts mobile bodies 2 having mobile body numbers of "72" and "73", which is mobile body 2 having the highest response necessity level among the remaining mobile bodies 2 (here, the two mobile bodies 2 having mobile body numbers of "72" and "73"). Then, of the two extracted mobile bodies 2, response order calculator 133 assigns "#3" to mobile body 2 having a mobile body number of "73", which is mobile body 2 having the shortest distance from mobile body 2 to which a place in the order was assigned in the attempt one previous (here, mobile body 2 having a mobile body number of "70", to which "#2" was assigned).

Next, response order calculator 133 extracts mobile body 2 having a mobile body number of "72", which is mobile body 2 having the highest response necessity level among the remaining mobile bodies 2 (here, the one mobile body 2 having a mobile body number of "72"). Here, since only one mobile body 2 is extracted, "#4" is assigned to mobile body 2 having a mobile body number of "72". A place in the order has been assigned to all mobile bodies 2, and response order calculator 133 therefore ends the processing for calculating the response order. As a result, four mobile bodies 2 having mobile body numbers of "70", "71", "72", and "73" are assigned the places in the order of "#2", "#1", "#4", and "#3", respectively.

### 3. User Interface (UI)

The specific form of the second information displayed in display 33 of information terminal 3, i.e., the specific form of the UI, will be described hereinafter.

### 3-1. Example 1

FIG. 16 is a diagram illustrating Example 1 of an image displayed in display 33 of information terminal 3. As illustrated in FIG. 16, in Example 1, display 33 displays first region A1 indicating details of the at least one mobile body 2 where an event is occurring, and second region A2 indicating the position of the at least one mobile body 2 on a map. Here, the details of mobile body 2 include the response necessity level of mobile body 2 (described later). In other words, information indicating the response necessity level for each of the at least one mobile body 2 and a map indicating the position of each of the at least one mobile body 2 are displayed in display 33.

In the example illustrated in (a) of FIG. 16, details of each of two mobile bodies 2 are displayed in first region A1. Specifically, region A11 indicating the details of mobile body 2 having a mobile body number of "70" and region A12 indicating the details of mobile body 2 having a mobile body number of "71" are displayed in first region A1. On the other hand, in the example illustrated in (b) of FIG. 16, only the details of mobile body 2 having the highest response necessity level are displayed in second region A1. Specifically, only region A11 indicating the details of mobile body 2 having a mobile body number of "70" is displayed in first region A1.

In first region A1, "number" indicates the mobile body number, "service status" indicates the status of the service being performed by mobile body 2, "vehicle status" indicates the status of mobile body 2, "stop position" indicates the type of area where mobile body 2 is stopped, and "response necessity level" indicates the response necessity level of mobile body 2.

In the example illustrated in FIG. 16, icons A21 and A22 indicating the position of each of the two mobile bodies 2 on the map, numbers indicating the mobile body numbers of mobile bodies 2 corresponding to icons A21 and A22, and icon D1 indicating the position of the responder on the map are displayed in second region A2. Movement routes B1 and B2 of the two mobile bodies 2 are displayed in second region A2 as well.

By looking at display 33 of information terminal 3, the responder can refer to the details of the at least one mobile body 2 where an event is occurring, and can refer to the response necessity level in particular, which makes it possible to determine which mobile body 2 to start the response from preferentially.

### 3-2. Example 2

FIG. 17 is a diagram illustrating Example 2 of an image displayed in display 33 of information terminal 3. As illustrated in FIG. 17, Example 2 differs from Example 1 in that column C1, indicating the response order, is displayed in first region A1. Points aside from this are the same as Example 1, and will therefore not be described here.

In the example illustrated in FIG. 17, the place in the order of mobile body 2 having a mobile body number of "70" being "#1", and the place in the order of mobile body 2 having a mobile body number of "71" being "#2", are displayed in column C1. Unlike the example illustrated in (a) of FIG. 17, movement routes E1 and E2 of the responder, based on the response order, are displayed in second region A2 in the example illustrated in (b) of FIG. 17.

By looking at display 33 of information terminal 3, the responder can refer to the details of the at least one mobile body 2 where an event is occurring, and can refer to the response order in particular, which eliminates the need for the responder to determine which mobile body 2 to start the response from preferentially him/herself.

Note that in Example 2, a number indicating the response order may also be displayed in second region A2.

### 4. Advantages, Etc.

As described above, the information processing method and information processing system 1 according to Embodiment 1 calculate the response necessity level for each of at least one mobile body 2 where an event is occurring, and outputs second information related to the response necessity level calculated. Accordingly, when, for example, an event is occurring in each of the plurality of mobile bodies 2, the responder can determine which mobile body 2 to start the response from preferentially by referring to the second information. This provides an advantage in that when a situation where each of a plurality of mobile bodies 2 is having difficulty moving autonomously has occurred, it is easy for a responder to improve the situation efficiently. This advantage is useful when the number of responders is low relative to the number of mobile bodies 2, especially when a single responder is required to respond to a plurality of mobile bodies 2.

### [Embodiment 2]

An information processing system and an information processing method according to Embodiment 2 will be described hereinafter.

### 1. Configuration

FIG. 18 is a block diagram illustrating an example of information processing system 1A according to Embodiment 2. Embodiment 2 differs from Embodiment 1 in that mobile body 2 further includes peripheral information obtainer 27 and storage device 4 further includes procedure DB 42. Embodiment 2 will also describe the configuration of operator terminal 5. Operator terminal 5 is connected to network N1 as in Embodiment 1. In the following, descriptions of configurations common to Embodiment 1 will be omitted as appropriate.

Peripheral information obtainer 27 of mobile body 2 obtains peripheral information related to the presence or absence of an object in the periphery of mobile body 2 from an image captured by a camera provided in mobile body 2 or a result of detection by a sensor that detects the surrounding environment such as a Light Detection And Ranging (LiDAR) sensor provided in mobile body 2.

Procedure DB 42 of storage device 4 stores procedure information related to a procedure for how the responder should respond to an event that has occurred, for each type of event. The procedure may include, for example, a method for operating mobile body 2, a method for restoring mobile body 2, a method for servicing mobile body 2, or the like. Procedure DB 42 obtains and stores the procedure information for each event from the operation management server that controls the dispatch of mobile bodies 2, e.g., the remote control system or the like. The procedure information for each event stored in procedure DB 42 is updated each time the procedure information for each event is obtained from the operation management server.

Obtainer 12 of information processing system 1A obtains the peripheral information of mobile body 2 from each of the at least one mobile body 2 where an event is occurring. The peripheral information is information related to the presence or absence of an object in the periphery of mobile body 2. The peripheral information for each of the at least one mobile body 2 where an event is occurring will also be referred to collectively as "sixth information" hereinafter. Obtainer 12 obtains the procedure information for each of the at least one mobile body 2 where an event is occurring from procedure DB 42 of storage device 4. The procedure information for each of the at least one mobile body 2 where an event is occurring will also be referred to collectively as "seventh information" hereinafter.

Operator terminal 5 includes communicator 51, processor 52, display 53, and input acceptor 54.

Communicator 51 is a communication interface for communicating with information processing system 1A over network N1. Communicator 51 may be a wired communication interface or a wireless communication interface.

Processor 52 is the main controller of operator terminal 5. Processor 52 manages and controls operator terminal 5 as a whole by operating cooperatively with communicator 51 and display 53.

Display 53 is a liquid crystal display or the like, for example, and displays information processed by processor 52. In Embodiment 2, display 53 is constituted by a touch panel display. The specific form of the information displayed in display 53 will be described in detail in "3. UI".

Input acceptor 54 is an interface that accepts inputs from an operator. In Embodiment 2, display 53 is constituted by a touch panel display as described above, and thus display 53 also functions as input acceptor 54. Note that input acceptor 54 may include, for example, a keyboard, or may include a pointing device such as a mouse or the like.

### 2. Operations

Operations performed by information processing system 1A according to Embodiment 2 will be described hereinafter. The following will mainly describe the differences from the operations by information processing system 1 according to Embodiment 1, and descriptions of common points will be omitted as appropriate.

### 2-1. Basic Operations

Basic operations performed by information processing system 1A will be described first. In information processing system 1A, response necessity level calculator 132 calculates the response necessity level by referring to the service information of mobile body 2 in question. Specifically, in terms of calculating the response necessity level according to the flowchart illustrated in FIG. 5, response necessity level calculator 132 operates basically the same as in the basic operations performed by information processing system 1. However, the service information referred to in information processing system 1A is different from the service information referred to in information processing system 1.

FIG. 19 is a diagram illustrating another example of the service information. As illustrated in FIG. 19, in addition to "mobile body number", "delivery status", "expected delivery time", "delivery priority level", and "number of packages delivered", the service information further includes "allowable wait time", "delivery package weight", and "total delivery package size". "Allowable wait time", "delivery package weight", and "total delivery package size" are all parameters that mainly take into account the transport of packages by mobile body 2 at a factory. "Allowable wait time" indicates an allowable length of waiting time from the expected delivery time in cases where the package has not been delivered by the expected delivery time. "Delivery package weight" indicates the total weight of the package to be delivered by mobile body 2. "Total delivery package size" indicates the total volume of the package to be delivered by mobile body 2.

In step S307 illustrated in FIG. 5, response necessity level calculator 132 of information processing system 1A confirms whether a length of time obtained by adding the allowable wait time to the length of time from the current time to the expected delivery time for mobile body 2 is no longer than a threshold. If the length of time obtained by the adding is longer than the threshold (S307: No), response necessity level calculator 132 calculates the response necessity level of mobile body 2 as "high" (S308). However, if the length of time obtained by the adding is no longer than the threshold (S307: Yes), response necessity level calculator 132 calculates the response necessity level of mobile body 2 as "highest" (S309). Note that "delivery package weight" and "total delivery package size" are not referred to in the calculation of the response necessity level, but are referred to in the display of the second information in display 33 of information terminal 3, for example.

### 2-2. Example 1 of Operations

The following will describe Example 1 of operations that information processing system 1A can perform. Note that it is sufficient for information processing system 1A to be capable of performing the example of basic operations, and whether to perform Example 1 of the operations is optional. If Example 1 of the operations is not performed, mobile body 2 need not include peripheral information obtainer 27.

FIG. 20 is a flowchart illustrating Example 1 of operations by information processing system 1A according to Embodiment 2. Example 1 of the operations by information processing system 1A differs from Example 1 of the operations by information processing system 1 in that response necessity level calculator 132 calculates the response necessity level for each of the at least one mobile body 2 by further referring to the sixth information, i.e., the peripheral information of mobile body 2, in addition to the third information and the fourth information. Specifically, obtainer 12 further obtains the sixth information, i.e., the peripheral information of each of the at least one mobile body 2 (S403A). Then, response necessity level calculator 132 calculates the response necessity level for each of the at least one mobile body 2 based on the first information, the third information, the fourth information, and the sixth information obtained (S404).

FIG. 21 is a diagram illustrating an example of the peripheral information. In FIG. 21, "mobile body number" indicates the unique number assigned to mobile body 2. Also, in FIG. 21, "object ID" indicates an identifier of an object detected in the periphery of mobile body 2. Also, in FIG. 21, "object type" indicates the type of the object detected. Also, in FIG. 21, "relative position" indicates a relative position of the detected object with respect to mobile body 2. Also, in FIG. 21, "relative speed" indicates a relative speed of the detected object with respect to mobile body 2. Also, in FIG. 21, "behavior" indicates the behavior of mobile body 2 with respect to the detected object. (a) in FIG. 21 indicates the peripheral information for mobile body 2 to which a mobile body number of "70" is assigned, and (b) in FIG. 21 indicates the peripheral information for mobile body 2 to which a mobile body number of "71" is assigned.

FIG. 22 is a flowchart illustrating an example of operations for calculating the response necessity level in Example 1 of the operations. In Example 1 of the operations by information processing system 1A, step S500A is performed before steps S501 to S511 of the example of calculating the response necessity level in Example 1 of the operations by information processing system 1 (see FIG. 9). Specifically, response necessity level calculator 132 confirms whether mobile body 2 is in contact with an object by referring to the peripheral information of mobile body 2 in question (S500A). If mobile body 2 is not in contact with an object (S500A: No), response necessity level calculator 132 then executes step S501 in FIG. 9. However, if mobile body 2 is in contact with an object (S500A: Yes), response necessity level calculator 132 calculates the response necessity level of mobile body 2 as "highest" without executing steps S501 to S503, S505, S507, and S509 in FIG. 9 (S511).

Incidentally, in Example 1 of operations by information processing system 1A, response necessity level calculator 132 may evaluate the situation arising in mobile body 2 as a score and calculate the response necessity level based on the score, as in the other example of the operations for calculating the response necessity level in Example 1 of the operations by information processing system 1 (see FIG. 10). In this case, in Example 1 of the operations by information processing system 1A, in addition to the example of evaluating the situation that has arisen in mobile body 2 illustrated in FIG. 11, a situation where mobile body 2 is "in contact with an object" is also evaluated. The situation is evaluated as 100 points if "Yes", and 0 points if "No". Response necessity level calculator 132 then executes steps S601 to S610 of FIG. 10.

Note that in Example 1 of the operations, response necessity level calculator 132 may change the response necessity level depending on the type of object when mobile body 2 is in contact with an object. For example, response necessity level calculator 132 may use different response necessity levels when the object is another mobile body and when the object is a pedestrian.

### 2-3. Example 2 of Operations

The following will describe Example 2 of operations that information processing system 1A can perform. Note that it is sufficient for information processing system 1A to be capable of performing the example of basic operations, and whether to perform Example 2 of the operations is optional. If Example 2 of the operations is not performed, obtainer 12 of information processing system 1A need not obtain the operator input information from operator terminal 5.

FIG. 23 is a flowchart illustrating an example of operations for calculating the response necessity level in Example 2 of the operations. In Example 2 of the operations by information processing system 1A, step S500B is performed before steps S501 to S511 of the example of calculating the response necessity level in Example 1 of the operations by information processing system 1 (see FIG. 9). Specifically, obtainer 12 obtains the operator input information to be sent from operator terminal 5. Response necessity level calculator 132 then confirms whether an input has been made by the operator by referring to the operator input information (S500B). Here, the operator input information is information input by the operator to input acceptor 54 of operator terminal 5. The operator input information includes the response necessity level specified by the operator.

If there is no input from an operator (S500B: No), response necessity level calculator 132 then executes step S501 in FIG. 9. However, if there is input from the operator (S500B: Yes), whether the response necessity level specified by the operator is "lowest" is confirmed (S512).

If the specified response necessity level is "lowest" (S512: Yes), response necessity level calculator 132 calculates the response necessity level of mobile body 2 as "lowest" (S504). However, if the specified response necessity level is not "lowest" (S512: No), response necessity level calculator 132 then confirms whether the specified response necessity level is "low" (S513).

If the specified response necessity level is "low" (S513: Yes), response necessity level calculator 132 calculates the response necessity level of mobile body 2 as "low" (S506). However, if the specified response necessity level is not "low" (S513: No), response necessity level calculator 132 then confirms whether the specified response necessity level is "mid" (S514).

If the specified response necessity level is "mid" (S514: Yes), response necessity level calculator 132 calculates the response necessity level of mobile body 2 as "mid" (S508). However, if the specified response necessity level is not "mid" (S514: No), response necessity level calculator 132 then confirms whether the specified response necessity level is "high" (S515).

If the specified response necessity level is "high" (S515: Yes), response necessity level calculator 132 calculates the response necessity level of mobile body 2 as "high" (S510). However, if the specified response necessity level is not "high" (S515: No), the input response necessity level is "highest", and thus response necessity level calculator 132 calculates the response necessity level of mobile body 2 as "highest" (S511).

### 2-4. Example 3 of Operations

The following will describe Example 3 of operations that information processing system 1A can perform. Note that it is sufficient for information processing system 1A to be capable of performing the example of basic operations, and whether to perform Example 3 of the operations is optional. If Example 3 of the operations is not performed, obtainer 12 of information processing system 1A need not obtain the procedure information from procedure DB 42.

FIG. 24 is a flowchart illustrating Example 3 of operations by information processing system 1A according to Embodiment 2. In Example 3 of the operations by information processing system 1A, after performing step S405 in the example of the basic operations by information processing system 1 (see FIG. 8), steps S901 to S903 illustrated in FIG. 24 are further performed.

Specifically, obtainer 12 of information processing system 1A obtains the seventh information, i.e., the procedure information for each of the at least one mobile body 2 where an event is occurring, from procedure DB 42 of storage device 4 (S901).

FIG. 25 is a diagram illustrating an example of the procedure information. In FIG. 25, "procedure ID" indicates a unique number assigned to the procedure. Also, in FIG. 25, "travel able/unable" indicates whether mobile body 2 is capable of traveling, i.e., whether mobile body 2 is unable to move autonomously and be operated remotely but is capable of travel when driven manually. Also, in FIG. 25, "status" indicates a status of the system of mobile body 2 (e.g., "normal", "malfunction", "communication anomaly", or the like). Also, in FIG. 25, "details" indicates details of the status of the system of mobile body 2. Also, in FIG. 25, "area type" indicates a type of the area where mobile body 2 is located (e.g., a sidewalk, an intersection, a crosswalk, or the like). Also, in FIG. 25, "delivery status" indicates whether mobile body 2 is out for delivery of a package or is returning to a base. Also, in FIG. 25, "surrounding environment status" indicates the status of the surrounding environment around mobile body 2. Also, in FIG. 25, "response details" indicates the procedure to be performed by the responder. Also, in FIG. 25, "standard response time" indicates the standard time required for the responder to complete the procedure. Also, in FIG. 25, "required skills" indicates the skills required for the responder to perform the procedure. Also, in FIG. 25, "required tools" indicates the tools required for the responder to perform the procedure.

(a) in FIG. 25 indicates the procedure information for a procedure to which a procedure ID of "220614" is assigned; (b) in FIG. 25 indicates the procedure information for a procedure to which a procedure ID of "939913" is assigned; (c) in FIG. 25 indicates the procedure information for a procedure to which a procedure ID of "920816" is assigned; and (d) in FIG. 25 indicates the procedure information for a procedure to which a procedure ID of "140920" is assigned.

Obtainer 12 obtains the corresponding procedure information according to the details of the event occurring in each of the at least one mobile body 2. For example, the procedure information indicated in (a) of FIG. 25 is obtained for mobile body 2 that is unable to travel and in which an event of a forward camera malfunctioning is occurring.

Returning to FIG. 24, processor 13 then confirms whether a response by the responder has been started for each of the at least one mobile body 2 in which an event is occurring (S902). Specifically, when the responder determines to respond to any mobile body 2 while viewing the image displayed in display 33 of information terminal 3 (see FIG. 16 or FIG. 17), the responder selects a "start response" icon for the corresponding mobile body 2. Upon doing so, communicator 31 of information terminal 3 sends, to information processing system 1A, a response start signal including the mobile body number of the corresponding mobile body 2 and the responder ID. When communicator 11 receives the response start signal, processor 13 of information processing system 1A determines that the response by the responder has been started.

If the response by the responder has been started (S902: Yes), communicator 11 outputs the procedure information by sending the procedure information to information terminal 3 from which the response start signal was sent (S903). As a result, the procedure information is displayed in display 33 of information terminal 3, which makes it possible for the responder to ascertain what procedure to perform.

Note that communicator 11 of information processing system 1A may output the procedure information along with the second information. In this case, step S902 is not required.

### 2-5. Other Examples of Operations

The following will describe other examples of operations that information processing system 1A can perform. Note that it is sufficient for information processing system 1A to be capable of performing the example of basic operations, and whether to perform the other examples of the operations is optional.

Response necessity level calculator 132 of information processing system 1A may periodically calculate and update the response necessity level as time passes leading up to the point when the response by the responder is started. Specifically, response necessity level calculator 132 may obtain the third information and the fourth information, i.e., the position information and the status information of mobile body 2, for each timing at which the response necessity level is calculated, and may calculate and update the response necessity level with reference to the third information and fourth information obtained. When the response necessity level is updated, communicator 11 outputs the second information including the updated response necessity level.

Note that response necessity level calculator 132 may calculate and update the response necessity level when communicator 11 receives, from any information terminal 3, a completion signal indicating that the response to mobile body 2 is complete.

For example, assume that at the point in time when an event occurs in mobile body 2, it is necessary for the responder to proceed to mobile body 2 within 15 minutes, and response necessity level calculator 132 has therefore calculated that the response necessity level is "low". In this case, if ten minutes have passed since the event occurred and the responder has not yet started responding, it is now necessary for the responder to proceed to mobile body 2 within five minutes, and response necessity level calculator 132 therefore calculates and updates the response necessity level as "high".

If a time is set, response necessity level calculator 132 of information processing system 1A may calculate and update the response necessity level at the set time. In other words, response necessity level calculator 132 may calculate and update the response necessity level at a future point in time, rather than at the point in time when an event has occurred in a given mobile body 2. For example, the responder sets a point in time further in the future than the current time while viewing the image displayed in display 33 of information terminal 3 (see FIG. 28, describe later). Upon doing so, communicator 31 of information terminal 3 sends, to information processing system 1A, a setting signal including the mobile body number of the corresponding mobile body 2 and the set time. When communicator 11 receives the setting signal, response necessity level calculator 132 of information processing system 1A calculates and updates the response necessity level at the set time. When the response necessity level is updated, communicator 11 outputs the second information including the updated response necessity level.

Additionally, if, in Example 2 of the operations in Embodiment 1, a plurality of responders are present and a plurality of mobile bodies 2 in which events are occurring are present, response order calculator 133 of information processing system 1A may assign the plurality of responders evenly among mobile bodies 2. For example, if four mobile bodies 2 and two responders are present, one responder is assigned to two mobile bodies 2. In this case, response order calculator 133 assigns the responder located closest to mobile body 2 to that mobile body 2.

FIG. 26 is a diagram illustrating an example of responder assignment. In the example illustrated in FIG. 26, a responder having a responder ID of "910424", located closest to the two mobile bodies 2 having mobile body numbers of "70" and "71", is assigned to those mobile bodies 2. Additionally, a responder having a responder ID of "200920", located closest to the two mobile bodies 2 having mobile body numbers of "72" and "73", is assigned to those mobile bodies 2.

Response order calculator 133 then calculates the response order by performing steps S801 to S804 in FIG. 14 for each of the responders.

### 3. UI

The specific form of the second information displayed in display 33 of information terminal 3, and the specific form of the information displayed in display 53 of operator terminal 5, i.e., the specific form of the UI, will be described hereinafter. The following will mainly describe the differences from the UI in Embodiment 1, and descriptions of common points will be omitted as appropriate.

### 3-1. Example 3

FIG. 27 is a diagram illustrating Example 3 of the image displayed in display 33 of information terminal 3. Unlike Example 1 indicated in (b) of FIG. 16, in Example 3, region A110, which indicates a procedure to be executed by the responder, is further displayed in display 33. In other words, Example 3 is an example of a UI corresponding to Example 3 of the operations by information processing system 1A.

In region A110, "response details" indicates the procedure to be performed by the responder; "required skills" indicates the skills required when the responder performs the procedure; and "required tools" indicates the tools required when the responder performs the procedure.

By viewing display 33 of information terminal 3, the responder can ascertain what procedure to perform for mobile body 2.

### 3-2. Example 4

FIG. 28 is a diagram illustrating Example 4 of an image displayed in display 33 of information terminal 3. Unlike Example 2 illustrated in (a) of FIG. 17, in Example 4, third region A3 including a slide bar for setting a time is further displayed in display 33. In other words, Example 4 is an example of a UI corresponding to the example of operations performed when a time is set, in the other examples of operations performed by information processing system 1A.

By manipulating the slide bar displayed in third region A3, the responder can set the time at which the response necessity level is to be calculated. Here, the responder can set the time to calculate the response necessity level to any desired time between the current time and 50 minutes in the future.

### 3-3. Example 5

FIG. 29 is a diagram illustrating Example 5 of an image displayed in display 33 of information terminal 3. Unlike Example 2 indicated in (a) of FIG. 17, in Example 5, the response necessity level, which is updated periodically, is displayed in first region A1. In other words, Example 5 is an example of a UI corresponding to the example of operations in which the response necessity level is updated as time passes, in the other examples of operations performed by information processing system 1A.

In the example indicated in (a) of FIG. 29, when a place in the order, in column C1 indicating the response order, has been changed in response to the response necessity level being updated, the change is displayed through highlighting. For example, if the place in the response order has risen, a frame surrounding the changed place in the order flashes in red (red is indicated by a broken line in FIG. 29). Similarly, for example, if the place in the response order has dropped, a frame surrounding the changed place in the order flashes in blue (blue is indicated by a dotted line in FIG. 29). In the example indicated in (b) of FIG. 29, region A111, indicating the reason why the places in the order were changed, is further displayed in display 33, unlike in the example indicated in (a) of FIG. 29. Here, the place in the order for mobile body 2 having a mobile body number of "70" having risen to "#1" due to the expected delivery time approaching is displayed in display 33.

By viewing display 33 of information terminal 3, the responder can ascertain, in real time, which mobile body 2 to start the response from preferentially.

### 3-4. Example 6

FIG. 30 is a diagram illustrating Example 6 of an image displayed in display 33 of information terminal 3. Unlike Example 2 indicated in (a) of FIG. 17, in Example 6, information related to another responder is displayed in display 33. Specifically, in addition to icon D1 indicating the location of the responder on the map, icon D2 indicating the location of another responder is displayed in second region A2.

In the example indicated in (a) of FIG. 30, an icon reading "other personnel responding", indicating that another responder is responding to mobile body 2 having a mobile body number of "70", is displayed in region A11 of first region A1. The responder therefore cannot respond to mobile body 2 having a mobile body number of "70".

In the example indicated in (b) of FIG. 30, icons A23 and A24 indicating the positions of two mobile bodies 2 having mobile body numbers of "72" and "73" on the map are further displayed in second region A2. In addition, region A13 indicating the details of mobile body 2 having a mobile body number of "72", and region A14 indicating the details of mobile body 2 having a mobile body number of "73", are further displayed in first region A1. In addition, a "start dispatch" icon, indicating that the responder will start moving to the location of the corresponding mobile body 2, and a "start response" icon, indicating that the responder will start the response to mobile body 2, are displayed in each of regions A11 to A14.

In region A13, another responder has already started moving, and thus an "on the way" icon is displayed instead of the "start dispatch" icon. Accordingly, an arrow indicating that icon D2 indicating the other responder is moving to mobile body 2 having a mobile body number of "72" is displayed in second region A2.

By viewing display 33 of information terminal 3, the responder can ascertain to which mobile body 2 the other responder is responding. The responder can therefore determine that he/she should respond to mobile body 2 to which the other responder is not responding.

### 3-5. Example 7

FIG. 31 is a diagram illustrating Example 7 of an image displayed in display 33 of information terminal 3. In the example indicated in (a) of FIG. 31, unlike Example 6 indicated in (b) of FIG. 30, the "start dispatch" icon and the "on the way" icon are not displayed in regions A11 to A14 of first region A1. On the other hand, in the example indicated in (a) of FIG. 31, an "assign" icon, indicating to which mobile body 2 the responder is to be assigned, is displayed in first region A1. In the example indicated in (a) of FIG. 31, the "assign" icon is displayed in each of regions A11 and A12. Accordingly, by viewing display 33 of information terminal 3, the responder can ascertain that he/she should respond to mobile bodies 2 having mobile body numbers of "70" and "71".

Unlike the example indicated in (a) of FIG. 31, in the example indicated in (b) of FIG. 31, movement routes E1 and E2 of the responder (the responder indicated by icon D1) according to the response order, and movement routes E3 and E4 of the other responder (the responder indicated by icon D2) according to the response order, are displayed in second region A2. Accordingly, by viewing display 33 of information terminal 3, the responder can ascertain the order in which to respond to mobile bodies 2, and can furthermore ascertain the order in which the other responder will respond mobile bodies 2.

### 3-6. Example 8

FIG. 32 is a diagram illustrating Example 8 of an image displayed in display 33 of information terminal 3. Unlike Example 1 indicated in (b) of FIG. 16, in Example 8, the peripheral information of mobile body 2 is further displayed in display 33. In other words, Example 8 is an example of a UI corresponding to Example 1 of the operations by information processing system 1A.

In the example indicated in (a) of FIG. 32, region A112, which uses text to indicate the surrounding conditions of mobile body 2, is displayed in display 33. Additionally, in the example indicated in (b) of FIG. 32, regions A41 and A42, which use images to indicate the surrounding conditions of mobile body 2, are displayed in display 33. An image captured by a camera provided in mobile body 2 is displayed in region A41. The image includes a frame surrounding an object detected by mobile body 2 and a line indicating the movement route of mobile body 2. Additionally, an image indicating the result of detection by a sensor provided in mobile body 2 is displayed in region A42. The image includes an icon indicating mobile body 2 and a point cloud indicating the detected object.

By viewing display 33 of information terminal 3, the responder can ascertain the conditions around mobile body 2.

### 3-7. Example 9

FIG. 33 is a diagram illustrating Example 9 of an image displayed in display 33 of information terminal 3. Example 9 will describe an example in which the responder has selected a "start response" icon in region A11 in order to start responding to mobile body 2 having a mobile body number of "70" in Example 1 indicated in (a) of FIG. 16. In Example 9, in addition to the above-described region A11, fifth region A5 indicating detailed information of mobile body 2 is further displayed in display 33 as a region indicating information of mobile body 2 to which the responder is to respond.

Specifically, a region indicating the specific status of mobile body 2, the status of a GPS provided in mobile body 2, and the delivery destination of the package in mobile body 2, a region for the responder to make inputs for operating mobile body 2 (also called a "vehicle operation input region" hereinafter), and a region for the responder to make an inputs for calling an operator (also called a "call input region" hereinafter), are displayed in fifth region A5. In addition, icon B11 indicating the delivery destination of the package is further displayed in second region A2. In addition, an "end response" icon is displayed in place of the "start response" icon in region A11, and a "delivery proxy" icon and a "delivery complete" icon are displayed in fifth region A5.

In the vehicle operation input region, when the responder selects an "error termination" icon, information indicating that the event which is occurring in mobile body 2 and which is to be responded to has been forced to end is sent to information processing system 1A and mobile body 2, respectively. Accordingly, processor 13 of information processing system 1A determines that an event to be responded to has not occurred in mobile body 2 until a new event to be responded to has occurred. As a result, the error status of mobile body 2 is canceled, and mobile body 2 can accept instructions or operations to start automated travel thereafter.

In addition, when the responder selects a "manual operation switch" icon, information indicating an instruction to switch mobile body 2 to a mode in which mobile body 2 can be driven manually is sent to mobile body 2. As a result, mobile body 2 switches to a mode in which mobile body 2 can be driven manually, and thereafter, the responder can manually drive mobile body 2.

In addition, when the responder selects a "manual vehicle position setting" icon, information indicating an instruction to set a movement destination of mobile body 2 is sent to mobile body 2. As a result, mobile body 2 receives the instruction from the responder and changes the movement destination. Thereafter, when, for example, the responder selects a "start automated travel" icon after specifying the movement destination of mobile body 2 in second region A2, mobile body 2 starts moving autonomously to the specified movement destination. In addition, when the responder selects a "stop automated travel" icon, mobile body 2 stops moving autonomously.

In the call input region, when the responder selects a "start call" icon, information indicating a request for a call with the operator is sent to operator terminal 5 via information processing system 1A. Through this, the responder can make a call with the operator. In addition, when the responder selects an "end call" icon, the call with the operator can be ended.

In fifth region A5, when the responder selects the "delivery proxy" icon, information indicating that the responder will deliver the package to location B of the delivery destination instead of mobile body 2 is sent to operator terminal 5 via information processing system 1A. Through this, the operator can ascertain that the responder is acting as a delivery proxy. Note that the first information stored in service management DB 41 may be updated based on the stated information. Specifically, of the first information stored in service management DB 41, the "delivery status" may be updated from "out for delivery" to "out for delivery by proxy" in the service information of mobile body 2 for which the responder is acting as a delivery proxy.

In addition, when the responder selects the "delivery complete" icon after delivering the package, information indicating that the responder has delivered the package is sent to operator terminal 5 via information processing system 1A. Through this, the operator can ascertain that the responder has completed the delivery as a delivery proxy. Note that the first information stored in service management DB 41 may be updated based on the stated information. Specifically, of the first information stored in service management DB 41, the "delivery status" may be updated from "out for delivery" to "delivery complete" in the service information of mobile body 2 for which the delivery is complete.

In region A11, when an "end response" icon is selected after the responder has finished responding to mobile body 2, information indicating that the responder has finished responding to mobile body 2 is sent to operator terminal 5 via information processing system 1A. Through this, the operator can ascertain that the responder has finished responding to mobile body 2.

### 3-8. Operator Terminal UI

FIG. 34 is a diagram illustrating an example of an image displayed in display 53 of operator terminal 5. As illustrated in FIG. 34, image F1 for remotely monitoring a plurality of (here, four) mobile bodies 2 is displayed in display 53. In image F1, image F11 is an image for remotely monitoring mobile body 2 having a mobile body number of "51"; image F12 is an image for remotely monitoring mobile body 2 having a mobile body number of "60"; image F13 is an image for remotely monitoring mobile body 2 having a mobile body number of "71"; and image F14 is an image for remotely monitoring mobile body 2 having a mobile body number of "70". Images captured by corresponding cameras provided in mobile body 2 (a forward image, a rear image, a left image, and a right image) are displayed in images F11 to F14. Although all the images are the same in FIG. 34, in reality, the images are different for each mobile body 2.

Icon G1 for the operator to request a response from a responder is displayed in each of images F11 and F13. Note that in image F13, the response necessity level is relatively high, and thus the frame of icon G1 is highlighted using a bold line. The operator can request a response from a responder by selecting icon G1.

Icon H1 indicating that the responder is currently responding is displayed in image F12. In addition, in image F12, icon G2 for calling the responder currently responding is displayed instead of icon G1. The operator can call the responder currently responding by selecting icon G2.

Here, icon H1 is displayed in display 53 when communicator 51 of operator terminal 5 receives the response underway information sent from information processing system 1A. In other words, when the responder selects the "start response" icon of any mobile body 2 in information terminal 3 (i.e., makes an input indicating that he/she will respond to mobile body 2), communicator 31 of information terminal 3 sends the response underway information, indicating that the responder is currently responding to mobile body 2, to information processing system 1A. Upon receiving the response underway information, communicator 11 of information processing system 1A outputs the response underway information by sending the response underway information to operator terminal 5. Then, as indicated by image F12, the image captured by mobile body 2 and icon H1 (i.e., the response underway information) are displayed in display 53 of operator terminal 5.

An image when icon G1 is selected is displayed in image F14. Icon G4 for canceling the response request, and icon G5 for inputting the response necessity level and response details, are displayed in image F14. The operator can cancel the request for a response made to a responder by selecting icon G4. The operator can also input the response necessity level and response details by selecting icon G5. Specifically, when icon G5 is selected, input image I1 for inputting the response necessity level and response details is displayed. The operator selects a "send" icon after inputting the response necessity level and response details. This makes it possible to make a response request that includes the response necessity level and response details.

### [Other Embodiments]

Although one or more aspects of an information processing method and information processing system 1 according to the present disclosure have been described thus far based on Embodiments 1 and 2, the present disclosure is not intended to be limited to Embodiments 1 and 2. Variations on Embodiments 1 and 2 conceived by one skilled in the art, embodiments implemented by combining constituent elements from different other embodiments, and the like may be included in the scope of one or more aspects of the present disclosure as well, as long as they do not depart from the essential spirit of the present disclosure.

For example, in Embodiments 1 and 2, information processing systems 1 and 1A include determiner 131, but the configuration is not limited thereto. If information processing systems 1 and 1A do not include determiner 131, obtainer 12 of information processing systems 1 and 1A may obtain information indicating that an event is occurring in at least one mobile body 2 from an external system such as the remote control system, for example, through communicator 11.

For example, in Embodiments 1 and 2, communicator (outputter) 11 sends the second information to information terminal 3 used by the responder, but the configuration is not limited thereto. For example, communicator (outputter) 11 may output the second information to another system. In this case, the other system may execute the processing with reference to the second information.

For example, in Embodiments 1 and 2, mobile body 2 is in a form which can be operated remotely by an operator, but the configuration is not limited thereto, and mobile body 2 may be in a form which cannot be operated remotely by an operator. In this case, mobile body 2 need not include remote operation controller 25. Additionally, in this case, determiner 131 of information processing systems 1 and 2 need not perform step S203 for determining whether remote operation is possible. In other words, in this case, determiner 131 may determine that an event is not occurring if mobile body 2 is capable of traveling automatically, and may determine that an event is occurring if mobile body 2 is incapable of traveling automatically.

For example, in Embodiments 1 and 2, mobile body 2 may be any entity at least capable of moving autonomously, and can include a security robot, an elevator, a construction robot, or the like in addition to an automated delivery robot. Of course, the security robot, the elevator, the construction robot, or the like may be in a form that can be operated remotely by an operator.

For example, the present disclosure can be implemented as a program for causing a processor to execute the steps included in the information processing method. Furthermore, the present disclosure can be implemented as a non-transitory computer-readable recording medium, such as a CD-ROM, in which the program is recorded.

For example, when the present disclosure is implemented by a program (software), each step is performed by executing the program using hardware resources such as a CPU, memory, and input/output circuitry of the computer. In other words, each step is executed by the CPU obtaining data from the memory, the input/output circuitry, and the like and performing computations, outputting computation results to the memory, the input/output circuitry, and the like.

In the foregoing Embodiments 1 and 2, the constituent elements included in information processing systems 1 and 1A are constituted by dedicated hardware. However, the constituent elements may be realized by executing software programs corresponding to those constituent elements. Each constituent element may be realized by a program executing unit such as a CPU or a processor reading out and executing a software program recorded into a recording medium such as a hard disk or semiconductor memory.

Some or all of the functions of information processing systems 1 and 1A according to the foregoing Embodiments 1 and 2 are typically implemented by LSI circuits, which are integrated circuits. These devices can be implemented individually as single chips, or may be implemented with a single chip including some or all of the devices. Further, the manner in which the circuit integration is achieved is not limited to LSI, and it is also possible to use a dedicated circuit or a general purpose processor. An FPGA (Field Programmable Gate Array) capable of post-production programming or a reconfigurable processor in which the connections and settings of the circuit cells within the LSI can be reconfigured may be used as well.

Furthermore, many variations on the embodiments of the present disclosure made within the scope conceivable by one skilled in the art are also included in the present disclosure, as long as those variations do not depart from the essential spirit of the present disclosure.

### [Industrial Applicability]

The present disclosure can be applied in a system that manages a mobile body that moves autonomously.

### [Reference Signs List]

1, 1A Information processing system
11 Communicator (outputter)
12 Obtainer
13 Processor
2 Mobile body
3 Information terminal
33 Display
5 Operator terminal
53 Display

## Claims

1. An information processing method executed by a computer, the information processing method comprising:
obtaining first information related to a service executed by each of at least one mobile body, among a plurality of mobile bodies that move autonomously, when an event to which a responder is to respond by traveling to a position of the at least one mobile body is occurring in the at least one mobile body;
calculating, based on the first information obtained, a response necessity level indicating a degree of a necessity to respond to the event, for each of the at least one mobile body; and
outputting second information related to the response necessity level calculated.

2. The information processing method according to claim 1, further comprising:
obtaining third information related to a status of each of the plurality of mobile bodies; and
determining, based on the third information obtained, whether the event is occurring in each of the plurality of mobile bodies.

3. The information processing method according to claim 2,
wherein the third information includes information indicating whether each of the plurality of mobile bodies is capable of moving autonomously.

4. The information processing method according to claim 3,
wherein the plurality of mobile bodies are capable of moving in response to a remote operation by an operator, and
the third information includes information indicating whether each of the plurality of mobile bodies is capable of communicating with the operator.

5. The information processing method according to any one of claims 1 to 4,
wherein the first information includes information indicating whether the service is in progress, information indicating an expected completion time of the service, or information indicating a priority level of the service, for each of the at least one mobile body.

6. The information processing method according to any one of claims 1 to 4, further comprising:
obtaining third information related to a status of each of the at least one mobile body and fourth information related to the position of each of the at least one mobile body; and
calculating the response necessity level for each of the at least one mobile body based further on the third information and the fourth information obtained.

7. The information processing method according to claim 6, further comprising:
obtaining fifth information related to a position of the responder; and
calculating a response order in which the responder is to respond to the at least one mobile body based on the response necessity level calculated, the fourth information obtained, and the fifth information obtained.

8. The information processing method according to any one of claims 1 to 4, further comprising:
obtaining sixth information related to whether an object is present in a vicinity of each of the at least one mobile body; and
calculating the response necessity level for each of the at least one mobile body based further on the sixth information obtained.

9. The information processing method according to any one of claims 1 to 4, further comprising:
obtaining operator input information including the response necessity level, the response necessity level being specified by an operator; and
calculating the response necessity level for each of the at least one mobile body based further on the operator input information obtained.

10. The information processing method according to any one of claims 1 to 4, further comprising:
outputting the second information to an information terminal used by the responder,
wherein the second information is displayed on a display included in the information terminal.

11. The information processing method according to claim 10,
wherein information indicating the response necessity level of each of the at least one mobile body and a map indicating the position of each of the at least one mobile body are displayed on the display.

12. The information processing method according to claim 11, further comprising:
obtaining fifth information related to a position of the responder; and
calculating a response order in which the responder is to respond to the at least one mobile body based on the response necessity level calculated and the fifth information obtained,
wherein information indicating the response order is further displayed on the display.

13. The information processing method according to claim 10, further comprising:
outputting, when, using the information terminal, the responder makes an input indicating the responder will respond to one mobile body among the at least one mobile body, response underway information indicating a response to the one mobile body is underway, to an operator terminal used by an operator,
wherein an image captured by the one mobile body and the response underway information are displayed in a display included in the operator terminal.

14. A program for causing a computer to execute the information processing method according to any one of claims 1 to 4.

15. An information processing system comprising:
an obtainer that obtains first information related to a service executed by each of at least one mobile body, among a plurality of mobile bodies that move autonomously, when an event to which a responder is to respond by traveling to a position of the at least one mobile body is occurring in the at least one mobile body;
a processor that calculates, based on the first information obtained by the obtainer, a response necessity level indicating a degree of a necessity to respond to the event, for each of the at least one mobile body; and
an outputter that outputs second information related to the response necessity level calculated by the processor.
